(19) Europäisches Patentamt / European Patent Office / Office européen des brevets

(11) EP 3 133 137 B1

(12) **EUROPÄISCHE PATENTSCHRIFT**

(45) Veröffentlichungstag und Bekanntmachung des Hinweises auf die Patenterteilung:
**18.09.2019 Patentblatt 2019/38**

(51) Int Cl.:
***C09K 19/54*** (2006.01) ***C09K 19/30*** (2006.01)
***C09K 19/44*** (2006.01) ***C09K 19/34*** (2006.01)
***C09K 19/12*** (2006.01)

(21) Anmeldenummer: **16002099.6**

(22) Anmeldetag: **08.11.2011**

(54) **FLÜSSIGKRISTALLINES MEDIUM UND ELEKTROOPTISCHE ANZEIGE**

LIQUID CRYSTALLINE MEDIUM AND ELECTRO-OPTIC DISPLAY

MILIEU À BASE DE CRISTAUX LIQUIDES ET DISPOSITIF D’AFFICHAGE ÉLECTRO-OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.12.2010 DE 102010053592**

(43) Veröffentlichungstag der Anmeldung:
**22.02.2017 Patentblatt 2017/08**

(62) Dokumentnummer(n) der früheren Anmeldung(en) nach Art. 76 EPÜ:
**11788369.4 / 2 649 154**

(73) Patentinhaber: **Merck Patent GmbH**
**64293 Darmstadt (DE)**

(72) Erfinder:
- **Goebel, Mark**
  **Winchester, SO23 8GJ (GB)**
- **Manabe, Atsutaka**
  **64625 Bensheim (DE)**
- **Montenegro, Elvira**
  **69469 Weinheim (DE)**
- **Pauluth, Detlef**
  **64372 Ober-Ramstadt (DE)**

(56) Entgegenhaltungen:
**WO-A1-2009/021671 WO-A1-2009/129911**
**JP-A- 55 023 169**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die vorliegende Erfindung betrifft Flüssigkristallmedien und deren Verwendung in Flüssigkristallanzeigen sowie diese Flüssigkristallanzeigen, besonders Flüssigkristallanzeigen, die den ECB- (Electrically Controlled Birefringence) Effekt mit dielektrisch negativen Flüssigkristallen in einer homeotropen Ausgangsorientierung verwenden. Die erfindungsgemäßen Flüssigkristallmedien zeichnen sich durch eine besonders niedrige Schaltzeit in den erfindungsgemäßen Anzeigen bei gleichzeitig hohem Spannungshaltevermögen (Englisch "voltage holding ratio", kurz VHR) aus.

Das Prinzip der elektrisch kontrollierten Doppelbrechung, der ECB-Effekt (electrically controlled birefringence) oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, dass flüssigkristalline Phasen hohe Werte für das Verhältnis der elastischen Konstanten $K_3/K_1$, hohe Werte für die optische Anisotropie $\Delta n$ und Werte für die dielektrische Anisotropie $\Delta\varepsilon \leq -0{,}5$ aufweisen müssen, um für hochinformative Anzeigeelemente basierend auf dem ECB-Effekt eingesetzt werden zu können. Auf dem ECB-Effekt basierende elektrooptische Anzeigeelemente weisen eine homöotrope Randorientierung auf (VA-Technologie = Vertical Aligned). Auch bei Anzeigen, die den so genannten IPS-Effekt verwenden, können dielektrisch negative Flüssigkristallmedien zum Einsatz kommen.

Für die technische Anwendung dieses Effektes in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich und elektrischen Gleich- und Wechselfeldern.

Ferner wird von technisch verwendbaren FK-Phasen eine flüssigkristalline Mesophase in einem geeigneten Temperaturbereich und eine niedrige Viskosität gefordert.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von zwei bis 25, vorzugsweise drei bis 18, Verbindungen hergestellt, um als FK-Phasen verwendbare Substanzen zu erhalten.

Matrix-Flüssigkristallanzeigen (MFK-Anzeigen) sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei im Allgemeinen Dünnfilm-Transistoren (TFT) verwendet werden, die in der Regel auf einer Glasplatte als Substrat angeordnet sind.

Man unterscheidet zwei Technologien: TFT's aus Verbindungshalbleitern wie z.B. CdSe oder TFT's auf der Basis von polykristallinem und u. a. amorphem Silizium. Letztere Technologie hat derzeit weltweit die größte kommerzielle Bedeutung.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die bisher am meisten verwendeten TFT-Anzeigen arbeiten üblicherweise mit gekreuzten Polarisatoren in Transmission und sind von hinten beleuchtet. Für TV Anwendungen werden IPS-Zellen oder ECB- (bzw. VAN-) Zellen verwendet, wohingegen für Monitore meist IPS-Zellen oder TN-Zellen und für "Note Books", "Lap Tops" und für mobile Anwendungen meist TN-Zellen Verwendung finden.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen, Monitore und "Note Books" oder für Displays mit hoher Informationsdichte z.B. in Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch einen nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige. Da der spezifische Widerstand der Flüssigkristallmischung durch Wechselwirkung mit den inneren Oberflächen der Anzeige im Allgemeinen über die Lebenszeit einer MFK-Anzeige abnimmt, ist ein hoher (Anfangs)-Widerstand sehr wichtig für Anzeigen die akzeptable Widerstandswerte über eine lange Betriebsdauer aufweisen müssen.

Anzeigen, die den ECB-Effekt verwenden haben sich als so genannte VAN- (Vertically Aligned Nematic) Anzeigen neben IPS- (In Plane Switching) Anzeigen (z.B.: Yeo, S.D., Vortrag 15.3: "A LC Display for the TV Application", SID 2004 International Symposium, Digest of Technical Papers, XXXV, Buch II, S. 758 & 759) und den lange bekannten TN-(Twisted Nematic) Anzeigen, als eine der drei zur Zeit wichtigsten neueren Typen von Flüssigkristallanzeigen insbesondere für Fernsehanwendungen etabliert.

Als wichtigste Bauformen sind zu nennen: MVA (Multi-Domain Vertical Alignment, z. B.: Yoshide, H. et al., Vortrag 3.1: "MVA LCD for Notebook or Mobile PCs ...", SID 2004 International Symposium, Digest of Technical Papers, XXXV, Buch I, S. 6 bis 9 und Liu, C.T. et al., Vortrag 15.1: "A 46-inch TFT-LCD HDTV Technology ...", SID 2004 International Symposium, Digest of Technical Papers, XXXV, Buch II, S. 750 bis 753), PVA (Patterned Vertical Alignment, z. B.: Kim, Sang Soo, Vortrag 15.4: "Super PVA Sets New State-of-the-Art for LCD-TV", SID 2004 International Symposium, Digest of Technical Papers, XXXV, Buch II, S. 760 bis 763) und ASV (Avanced Super View, z. B.: Shigeta, Mitzuhiro und Fukuoka, Hirofumi, Vortrag 15.2: "Development of High Quality LCDTV", SID 2004 International Symposium, Digest of Technical Papers, XXXV, Buch II, S. 754 bis 757).

In allgemeiner Form werden die Technologien z.B. in Souk, Jun, SID Seminar 2004, Seminar M-6: "Recent Advances in LCD Technology", Seminar Lecture Notes, M-6/1 bis M-6/26 und Miller, Ian, SID Seminar 2004, Seminar M-7: "LCD-Television", Seminar Lecture Notes, M-7/1 bis M-7/32, verglichen. Obwohl die Schaltzeiten moderner ECB-Anzeigen durch Ansteuerungsmethoden mit Übersteuerung (overdrive) bereits deutlich verbessert wurden, z.B.: Kim, Hyeon Kyeong et al., Vortrag 9.1: "A 57-in. Wide UXGA TFT-LCD for HDTV Application", SID 2004 International Symposium, Digest of Technical Papers, XXXV, Buch I, S. 106 bis 109, ist die Erzielung von videotauglichen Schaltzeiten insbesondere beim Schalten von Graustufen immer noch ein noch nicht zufriedenstellend gelöstes Problem.

ECB-Anzeigen verwenden wie ASV-Anzeigen flüssigkristalline Medien mit negativer dielektrischer Anisotropie ($\Delta\varepsilon$), wohingegen TN- und bislang alle gebräuchlichen IPS-Anzeigen flüssigkristalline Medien mit positiver dielektrischer Anisotropie verwenden.

In derartigen Flüssigkristallanzeigen werden die Flüssigkristalle als Dielektrika verwendet, deren optische Eigenschaften sich bei Anlegen einer elektrischen Spannung reversibel ändern.

Da bei Anzeigen im allgemeinen, also auch bei Anzeigen nach diesen erwähnten Effekten, die Betriebsspannung möglichst gering sein soll, werden Flüssigkristallmedien eingesetzt, die in der Regel überwiegend aus Flüssigkristallverbindungen zusammengesetzt sind, die alle das gleiche Vorzeichen der dielektrischen Anisotropie aufweisen und einen möglichst großen Betrag der dielektrischen Anisotropie haben. Es werden in der Regel allenfalls geringere Anteile an neutralen Verbindungen und möglichst keine Verbindungen mit einem Vorzeichen der dielektrischen Anisotropie, das dem des Mediums entgegengesetzt ist, eingesetzt. Bei den Flüssigkristallmedien mit negativer dielektrischer Anisotropie für ECB-Anzeigen werden somit überwiegend Verbindungen mit negativer dielektrischer Anisotropie eingesetzt. Die eingesetzten Flüssigkristallmedien bestehen in der Regel überwiegend und meist sogar weitestgehend aus Flüssigkristallverbindungen mit negativer dielektrischer Anisotropie.

Bei den gemäß der vorliegenden Anmeldung verwendeten Medien werden typischerweise allenfalls nennenswerte Mengen an dielektrisch neutralen Flüssigkristallverbindungen und in der Regel nur sehr geringe Mengen an oder gar keine dielektrisch positiven Verbindungen eingesetzt, da generell die Flüssigkristallanzeigen möglichst niedrige Ansteuerspannungen haben sollen.

Nematische Flüssigkristallmischungen mit negativer dielektrische Anisotropie, die eine geringe Menge an TINUVIN®770, einer Verbindung der Formel

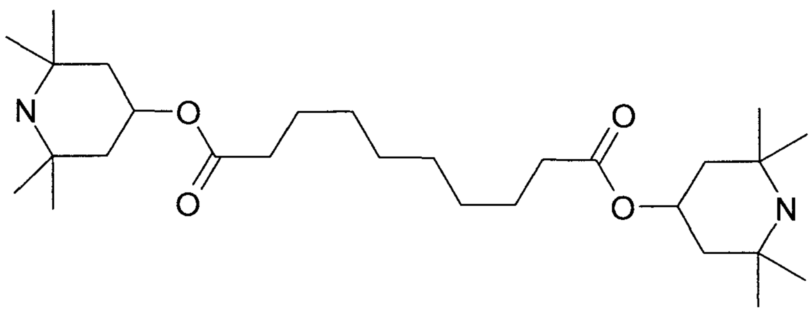

,

als Stabilisatoren enthalten, sind z.B. aus WO 2009/129911 A1 bekannt.

Ähnliche Flüssigkristallmischungen sind z.B. auch aus EP 2 182 046 A1, WO 2008/009417 A1, WO 2009/021671 A1 und WO 2009/115186 A1 bekannt. Dort wird jedoch nicht auf die Verwendung von Stabilisatoren hingewiesen.

Diese Medien können gemäß der dortigen Offenbarung optional auch Stabilisatoren verschiedener Arten, wie z. B. Phenole und sterisch gehinderte Amine (Englisch: hindered amine light stabilizers, kurz: HALS) enthalten. Diese

Medien sind jedoch durch relativ hohe Schwellenspannungen und durch bestenfalls moderate Stabilitäten gekennzeichnet. Insbesondere sinkt deren "Voltage Holding Ratio" nach Belastung. Außerdem tritt oft eine gelbliche Verfärbung auf.

Die Verwendung verschiedener Stabilisatoren in flüssigkristallinen Medien wird z. B. in JP (S)55-023169 (A), JP (H)05-117324 (A), WO 02/18515 A1 und JP (H) 09-291282 (A) beschrieben.

Verbindungen mit einem axial durch Halogen (F) substituierten Cycloheylenring sind u. a. aus DE 197 14 231, DE 187 23 275, DE 198 31 712 und DE 199 45 890 bekannt. Auch in Kirsch, P., Reiffenrath, V. und Bremer, M., Molecular Design and Synthesis, Synlett 1999(4), 389 ff., Kirsch, P. und Tarumi, K. Angew. Chem. Int. Ed., 1997(37), 484 ff. und Kirsch, P., Heckmeier, M. und Tarumi, K., Liquid Crystals, 1999(26), 449 ff. werden entsprechende Verbindungen erwähnt. Flüssigkristalline Medien, die derartige Verbindungen enthalten, sind jedoch insbesondere für viele anspruchsvolle Anwendungen nicht ausreichend stabil. Besonders kann bei erhöhten Temperaturen eine Zersetzung eintreten. Aber auch unter UV-Belastung treten oft Probleme auf. Hier ist insbesondere eine unerwünschte, starke Abnahme des Spannungshaltevermögens (der sog. "Voltage Holding Ratio", kurz VHR bzw. HR) zu beobachten.

Die Stabilisierung von Flüssigkristallmischungen, die entsprechende Verbindungen enthalten, durch Zugabe von Verbindungen mit einer Pyridin-5-yl-Einheit, wird in DE 100 50 880 vorgeschlagen. Diese führt aber, wie unten näher ausgeführt wird, oft nicht zu auseichender Stabilität.

Die Flüssigkristallmedien des Standes der Technik mit entsprechend niedrigen Ansteuerspannungen haben relativ geringe elektrische Widerstände bzw. eine geringe VHR und führen in den Anzeigen oft zu unerwünschtem "Flicker" und/oder ungenügender Transmission. Außerdem sind sie nicht ausreichend stabil gegen Temperatur- und/oder UV-Belastung, zumindest dann, wenn sie eine entsprechend hohe Polarität aufweisen, wie sie für niedrige Ansteuerspannungen nötig ist.

Außerdem ist die Ansteuerspannung der Anzeigen des Standes der Technik oft zu groß, insbesondere für Anzeigen die nicht direkt oder nicht durchgehend ans Stromversorgungsnetz angeschlossen werden wie z. B. Anzeigen für mobile Anwendungen.

Außerdem muss der Phasenbereich ausreichend breit für die beabsichtigte Anwendung sein.

Die Schaltzeiten der Flüssigkristallmedien in den Anzeigen müssen verbessert, also verringert, werden. Dies ist besonders für Anzeigen für Fernseh- oder Multi-Media Anwendungen wichtig. Zur Verbesserung der Schaltzeiten ist in der Vergangenheit wiederholt vorgeschlagen worden, die Rotationsviskosität der Flüssigkristallmedien ($\gamma_1$) zu optimieren, also Medien mit einer möglichst geringen Rotationsviskosität zu realisieren. Die dabei erzielten Ergebnisse sind jedoch nicht ausreichend für viele Anwendungen und lassen es daher wünschenswert erscheinen, weitere Optimierungsansätze aufzufinden.

Ganz besonders wichtig ist eine ausreichende Stabilität der Medien gegen extreme Belastungen, insbesondere gegen UV- und Temperaturbelastung. Besonders bei Anwendungen in Anzeigen in mobilen Geräten wie z. B. Mobiltelefonen kann dieses entscheidend sein.

Der Nachteil der bisher bekannten MFK-Anzeigen beruht auf ihrem vergleichsweise niedrigen Kontrast, der relativ hohen Blickwinkelabhängigkeit und der Schwierigkeit in diesen Anzeigen Graustufen zu erzeugen, sowie ihrer ungenügenden VHR und ihrer ungenügenden Lebensdauer.

Es besteht somit immer noch ein großer Bedarf nach MFK-Anzeigen mit sehr hohem spezifischen Widerstand bei gleichzeitig großem Arbeitstemperaturbereich, kurzen Schaltzeiten und niedriger Schwellenspannung, mit deren Hilfe verschiedene Graustufen erzeugt werden können und die insbesondere eine gute und stabile VHR aufweisen.

Der Erfindung liegt die Aufgabe zugrunde MFK-Anzeigen, nicht nur für Monitor- und TV-Anwendungen, sondern auch für Mobiltelefone und Navigationssysteme, welche auf dem ECB- oder auf dem IPS-Effekt beruhen, bereitzustellen, die die oben angegebenen Nachteile nicht oder nur in geringerem Maße und gleichzeitig sehr hohe spezifische Widerstände aufweisen. Insbesondere muss für Mobiltelefone und Navigationssysteme gewährleistet sein, dass diese auch bei extrem hohen und extrem niedrigen Temperaturen arbeiten.

Überraschend wurde gefunden, dass Flüssigkristallanzeigen realisiert werden können, die insbesondere in ECB-Anzeigen eine niedrige Schwellenspannung bei geringen Schaltzeiten aufweisen und gleichzeitig eine ausreichend breite nematische Phase, eine günstige, niedrige Doppelbrechung ($\Delta n$), gute Stabilität gegen thermische Zersetzung und eine stabile hohe VHR aufweisen, wenn man in diesen Anzeigeelementen nematische Flüssigkristallmischungen verwendet, die mindestens eine Verbindung der Formel I, sowie jeweils mindestens eine Verbindung der Formel II und mindestens eine Verbindung ausgewählt aus der Gruppe der Verbindungen der Formeln III-1 bis III-4, enthalten.

Derartige Medien sind insbesondere für elektrooptische Anzeigen mit einer Aktivmatrix-Adressierung basierend auf dem ECB-Effekt sowie für IPS-Anzeigen (In plane switching) zu verwenden.

Die erfindungsgemäßen Mischungen zeigen sehr breite nematische Phasenbereiche mit Klärpunkten $\geq$ 70°C, sehr günstige Werte für die kapazitive Schwelle, relativ hohe Werte für die Holding Ratio und gleichzeitig gute Tieftemperaturstabilitäten bei -20°C und -30°C, sowie sehr geringe Rotationsviskositäten. Weiterhin zeichnen sich die erfindungsgemäßen Mischungen durch ein gutes Verhältnis von Klärpunkt und Rotationsviskosität und durch eine hohe negative dielektrische Anisotropie aus.

Die Erfindung betrifft somit ein flüssigkristallines Medium mit einer nematischen Phase und einer negativen

dielektrischen Anisotropie, welches

a) die Verbindung der Formel I, bevorzugt in einer Konzentration bis zu 1,0 %, bevorzugt bis zu 0,10 %, besonders bevorzugt bis zu 0,05 %,

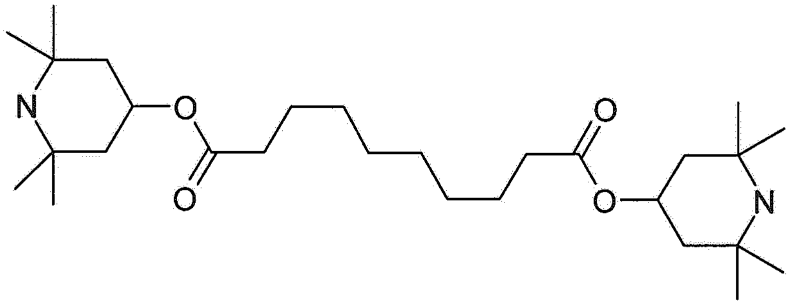

I

und ein oder mehrere Phenolderivate ausgewählt aus der Gruppe der Verbindungen der Formel

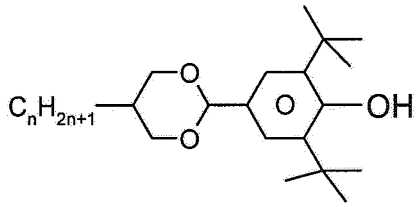

worin

n eine ganze Zahl im Bereich von 1 bis 12

bedeutet,

b) eine oder mehrere Verbindungen der Formel II

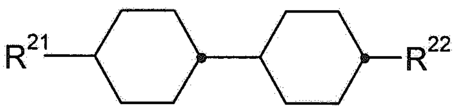

II

worin

$R^{21}$ einen unsubstituierten Alkylrest mit 1 bis 7 C-Atomen oder einen unsubstituierten Alkenylrest mit 2 bis 7 C-Atomen, bevorzugt einen *n*-Alkylrest, besonders bevorzugt mit 3, 4 oder 5 C-Atomen, und

$R^{22}$ einen unsubstituierten Alkenylrest mit 2 bis 7 C-Atomen, bevorzugt mit 2, 3, oder 4 C-Atomen, stärker bevorzugt einen Vinylrest oder einen 1-Propenylrest und insbesondere einen Vinylrest

bedeuten, und

c) eine oder mehrere Verbindungen ausgewählt aus der Gruppe der Verbindungen der Formeln III-1 bis II-4

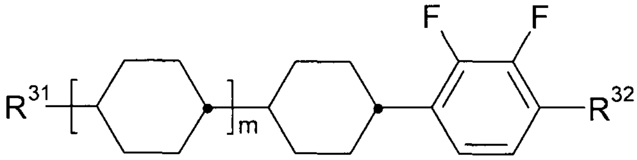

III-1

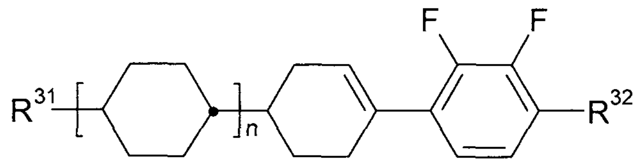

III-2

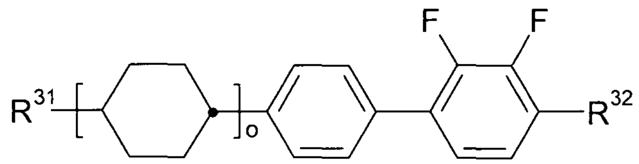

III-3

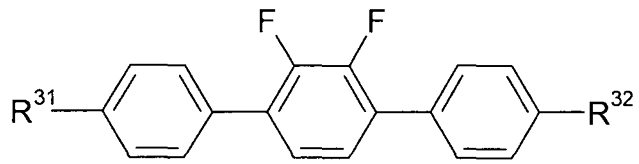

III-4

worin

R[31] einen unsubstituierten Alkylrest mit 1 bis 7 C-Atomen, bevorzugt einen *n*-Alkylrest, besonders bevorzugt mit 2 bis oder 5 C-Atomen,

R[32] einen unsubstituierten Alkylrest mit 1 bis 7 C-Atomen, bevorzugt mit 2 bis 5 C-Atomen oder einen unsubstituierten Alkoxyrest mit 1 bis 6 C-Atomen, bevorzugt mit 2, 3 oder 4 C-Atomen, und

m, n und o jeweils unabhängig voneinander 0 oder 1,

bedeuten,

enthält.

In der vorliegenden Anmeldung bedeutet

Alkyl besonders bevorzugt geradkettiges Alkyl, insbesondere $CH_3$-, $C_2H_5$-, *n*-$C_3H_7$, *n*-$C_4H_9$- oder *n*-$C_5H_{11}$-, und

Alkenyl besonders bevorzugt $CH_2$=CH-, *E*-$CH_3$-CH=CH-, $CH_2$=CH-$CH_2$-$CH_2$-, *E*-$CH_3$-CH=CH-$CH_2$-$CH_2$- oder *E*-(*n*-$C_3H_7$)-CH=CH-.

Vorzugsweise enthält das erfindungsgemäße Medium die Verbindung der Formel I in einer Gesamtkonzentration im Bereich von $1{,}0 \cdot 10^{-4}$ % oder mehr bis 0,10 % oder weniger, bevorzugt von $5{,}0 \cdot 10^{-3}$ % oder mehr bis $5{,}0 \cdot 10^{-3}$ % oder weniger, besonders bevorzugt von $1{,}0 \cdot 10^{-3}$ % oder mehr bis $4{,}0 \cdot 10^{-3}$ % oder weniger.

Vorzugsweise enthält das erfindungsgemäße Medium eine oder mehrere Verbindungen der Formel II in einer Gesamtkonzentration im Bereich von 5 % oder mehr bis 90 % oder weniger, bevorzugt von 10 % oder mehr bis 80 % oder weniger, besonders bevorzugt von 20 % oder mehr bis 70 % oder weniger.

Vorzugsweise enthält das erfindungsgemäße Medium eine oder mehrere Verbindungen ausgewählt aus der Gruppe der Formeln III-1 bis III-4 in einer Gesamtkonzentration im Bereich von 10 % oder mehr bis 80 % oder weniger, bevorzugt von 15 % oder mehr bis 70 % oder weniger, besonders bevorzugt von 20 % oder mehr bis 60 % oder weniger.

Insbesondere bevorzugt enthält das erfindungsgemäße Medium
eine oder mehrere Verbindungen der Formel III-1 in einer Gesamtkonzentration im Bereich von 5 % oder mehr bis 30 % oder weniger,
eine oder mehrere Verbindungen der Formel III-2 in einer Gesamtkonzentration im Bereich von 3 % oder mehr bis 30 % oder weniger,
eine oder mehrere Verbindungen der Formel III-3 in einer Gesamtkonzentration im Bereich von 5 % oder mehr bis 30 % oder weniger,
eine oder mehrere Verbindungen der Formel III-4 in einer Gesamtkonzentration im Bereich von 1 % oder mehr bis 30 % oder weniger.

Bevorzugte Verbindungen der Formel II sind die Verbindungen ausgewählt aus der Gruppe der Verbindungen der Formeln II-1 und II-2, bevorzugt ausgewählt Verbindungen der Formel II-1

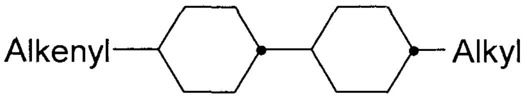

II-1

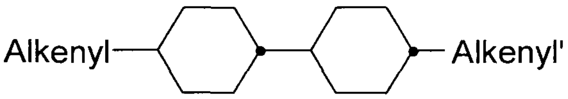

II-2

worin

Alkyl einen Alkylrest mit 1 bis 7 C-Atomen, bevorzugt mit 2 bis 5 C-Atomen,

Alkenyl einen Alkenylrest mit 2 bis 5 C-Atomen, bevorzugt mit 2 bis 4 C-Atomen, besonders bevorzugt 2 C-Atomen,

Alkenyl' einen Alkenylrest mit 2 bis 5 C-Atomen, bevorzugt mit 2 bis 4 C-Atomen, besonders bevorzugt mit 2 bis 3 C-Atomen,

bedeuten.

Die erfindungsgemäßen Medien enthalten bevorzugt eine oder mehrere Verbindungen der Formel III-1, bevorzugt eine oder mehrere Verbindungen ausgewählt aus der Gruppe der Verbindungen der Formeln III-1-1 und III-1-2

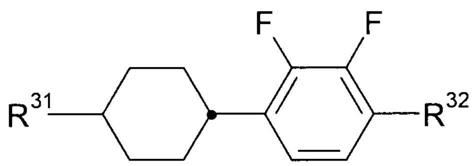

III-1-1

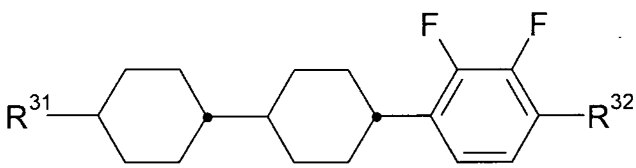

III-1-2

worin die Parameter die oben bei Formel III-1 gegeben Bedeutung haben und bevorzugt

$R^{31}$ einen Alkylrest mit 2 bis 5 C-Atomen, bevorzugt mit 3 bis 5 C-Atomen, und

$R^{32}$ einen Alkyl- oder Alkoxyrest mit 2 bis 5 C-Atomen, bevorzugt einen Alkoxyrest mit 2 bis 4 C-Atomen, oder ein Alkenyloxyrest mit 2 bis 4 C-Atomen.

bedeuten.

Die erfindungsgemäßen Medien enthalten bevorzugt eine oder mehrere Verbindungen der Formel III-2, bevorzugt eine oder mehrere Verbindungen ausgewählt aus der Gruppe der Verbindungen der Formeln III-2-1 und III-2-2

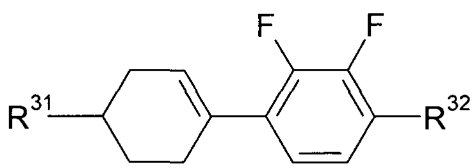

III-2-1

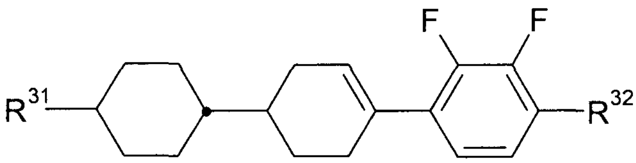

III-2-2

worin die Parameter die oben bei Formel III-2 gegeben Bedeutung haben und bevorzugt

$R^{31}$ einen Alkylrest mit 2 bis 5 C-Atomen, bevorzugt mit 3 bis 5 C-Atomen, und

$R^{32}$ einen Alkyl- oder Alkoxyrest mit 2 bis 5 C-Atomen, bevorzugt einen Alkoxyrest mit 2 bis 4 C-Atomen oder ein Alkenyloxyrest mit 2 bis 4 C-Atomen,

bedeuten.

Die erfindungsgemäßen Medien enthalten bevorzugt eine oder mehrere Verbindungen der Formel III-3, bevorzugt eine oder mehrere Verbindungen ausgewählt aus der Gruppe der Verbindungen der Formeln III-3-1 und III-3-2

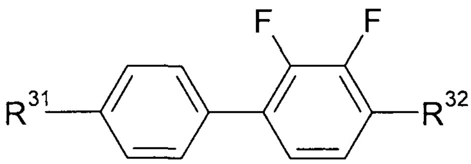

III-3-1

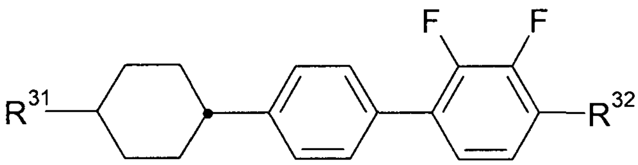

III-3-2

worin die Parameter die oben bei Formel III-3 gegeben Bedeutung haben und bevorzugt

$R^{31}$ einen Alkylrest mit 2 bis 5 C-Atomen, bevorzugt mit 3 bis 5 C-Atomen, und

$R^{32}$ einen Alkyl- oder Alkoxyrest mit 2 bis 5 C-Atomen, bevorzugt ein Alkoxyrest mit 2 bis 4 C-Atomen oder ein Alkenyloxyrest mit 2 bis 4 C-Atomen,

bedeuten.

Bevorzugt enthalten die erfindungsgemäßen Medien die folgenden Verbindungen in den angegebenen Gesamtkonzentrationen

| | |
|---|---|
| 10 - 60 | Gew.-% einer oder mehrerer Verbindungen der Formel III und/oder |
| 30 - 80 | Gew.-% einer oder mehrerer Verbindungen der Formeln IV und/oder V |

wobei der Gesamtgehalt aller Verbindungen in dem Medium 100 % beträgt.

Gegenstand der vorliegenden Erfindung sind auch elektrooptische Anzeigen oder elektrooptische Komponenten, die erfindungsgemäße flüssigkristalline Medien enthalten. Bevorzugt sind elektrooptische Anzeigen die auf dem VA- oder dem ECB-Effekt basieren und insbesondere solche, die mittels einer Aktivmatrix-Adressierungsvorrichtung angesteuert werden.

Dementsprechend ist die Verwendung eines erfindungsgemäßen flüssigkristallinen Mediums in einer elektrooptischen Anzeige oder in einer elektrooptischen Komponente ebenfalls Gegenstand der vorliegenden Erfindung, ebenso wie ein Verfahren zur Herstellung der erfindungsgemäßen flüssigkristallinen Medien, dadurch gekennzeichnet, dass eine oder mehrere Verbindungen der Formel I mit einer oder mehreren Verbindungen, die eine oder mehrere Gruppen der Teilformeln IIa enthalten, bevorzugt mit einer oder mehreren Verbindungen der Formel II, mit einer oder mehreren weiteren Verbindungen, bevorzugt ausgewählt aus der Gruppe der Verbindungen der Formeln III und IV und/oder V

gemischt wird.

Außerdem betrifft die vorliegenden Erfindung ein Verfahren zur Stabilisierung eines flüssigkristallinen Mediums, das eine oder mehrere Verbindungen der Formeln II und eine oder mehrere Verbindungen ausgewählt aus der Gruppe der Verbindungen der Formeln III-1 bis III-4 enthält, dadurch gekennzeichnet, dass dem Medium die Verbindung TINUVIN®770 zugesetzt werden.

In einer weiteren bevorzugten Ausführungsform enthält das Medium eine oder mehrere Verbindungen der Formel IV

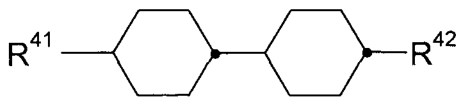

IV

worin

| | |
|---|---|
| $R^{41}$ | Alkyl mit 1 bis 7 C-Atomen, bevorzugt mit 2 bis 5 C-Atomen, und |
| $R^{42}$ | Alkyl mit 1 bis 7 C-Atomen oder Alkoxy mit 1 bis 6 C-Atomen, bevorzugt mit 2 bis 5 C-Atomen, |

bedeuten.

In einer weiteren bevorzugten Ausführungsform enthält das Medium eine oder mehrere Verbindungen der Formel IV, ausgewählt aus der Gruppe der Verbindungen der Formeln IV-1 und IV-2,

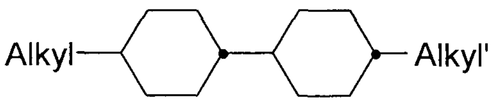

IV-1

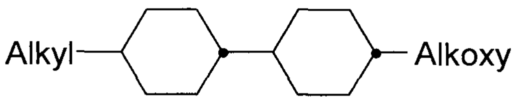

IV-2

worin

| | |
|---|---|
| Alkyl und Alkyl' | unabhängig voneinander Alkyl mit 1 bis 7 C-Atomen, bevorzugt mit 2 bis 5 C-Atomen |
| Alkoxy | Alkoxy mit 1 bis 5 C-Atomen, bevorzugt mit 2 bis 4 C-Atomen und |
| Alkenyl und Alkenyl' | unabhängig voneinander, Alkenyl mit 2 bis 7 C-Atomen, bevorzugt mit 2 bis 5 C-Atomen bedeuten. |

In einer weiteren bevorzugten Ausführungsform enthält das Medium eine oder mehrere Verbindungen der Formel V

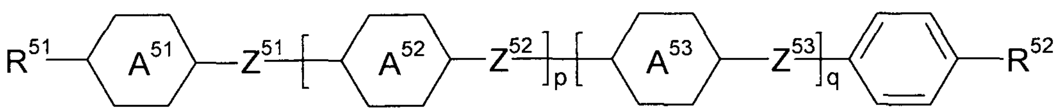

V

worin

| | |
|---|---|
| $R^{51}$ und $R^{52}$ | unabhängig voneinander eine der für $R^{21}$ und $R^{22}$ gegebenen Bedeutung haben und bevorzugt Alkyl mit 1 bis 7 C-Atomen, bevorzugt n-Alkyl, besonders bevorzugt n-Alkyl mit 1 bis 5 C-Atomen, Alkoxy mit 1 bis 7 C-Atomen, bevorzugt *n*-Alkoxy, besonders bevorzugt n-Alkoxy mit 2 bis 5 C-Atomen, Alkoxyalkyl, Alkenyl oder Alkenyloxy mit 2 bis 7 C-Atomen, bevorzugt mit 2 bis 4 C-Atomen, bevorzugt Alkenyloxy, |

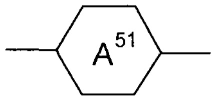

bis

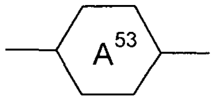
,

soweit vorhanden, jeweils unabhängig voneinander

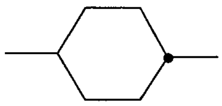
,
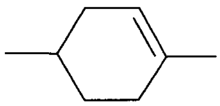
,
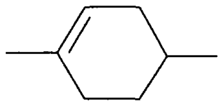
,

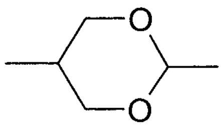
,
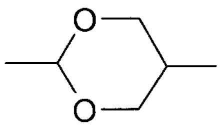
,
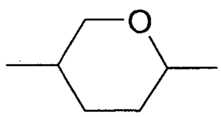
,

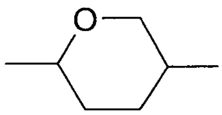
,
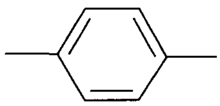
,
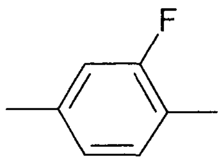
,

oder

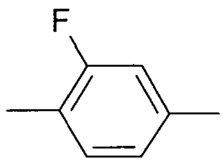
,

bevorzugt

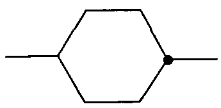
,
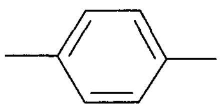
,
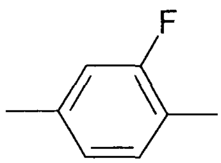
,

oder

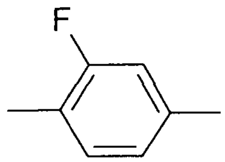

,

bevorzugt

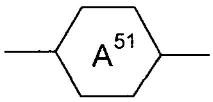

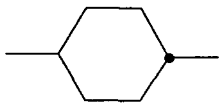

,

und, wenn vorhanden,

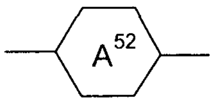

bevorzugt

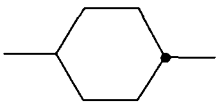

,

| | |
|---|---|
| $Z^{51}$ bis $Z^{53}$ | jeweils unabhängig voneinander $-CH_2-CH_2-$, $-CH_2-O-$, $-CH=CH-$, $-C\equiv C-$, $-COO-$ oder eine Einfachbindung, bevorzugt $-CH_2-CH_2-$, $-CH_2-O-$ oder eine Einfachbindung und besonders bevorzugt eine Einfachbindung, |
| p und q | jeweils unabhängig voneinander 0 oder 1, |
| (p + q) | bevorzugt 0 oder 1, |

bedeuten.

In einer weiteren bevorzugten Ausführungsform enthält das Medium eine oder mehrere Verbindungen ausgewählt der Formel V ausgewählt aus der Gruppe der Verbindungen der Formeln V-1 bis V-10, bevorzugt ausgewählt aus der Gruppe der Verbindungen der Formeln V-1 bis V-5,

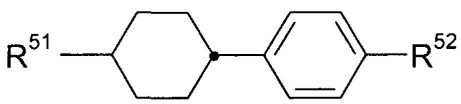

V-1

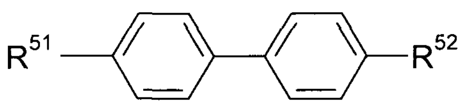

V-2

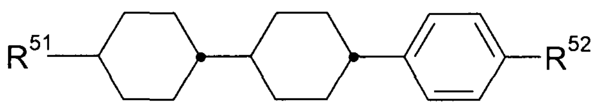

V-3

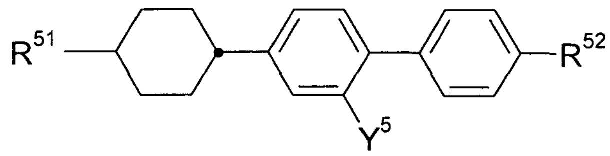

V-4

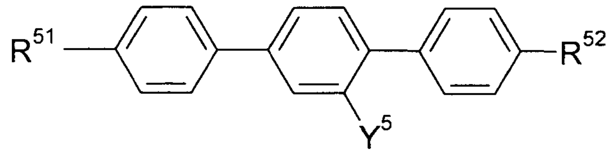

V-5

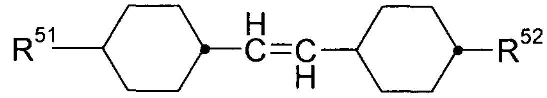

V-6

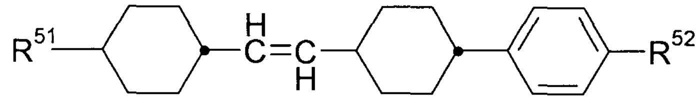

V-7

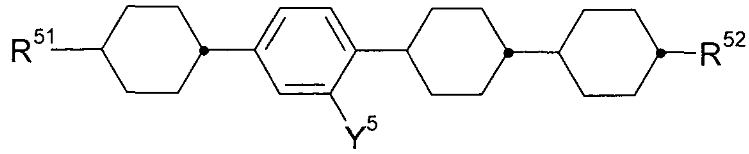

V-8

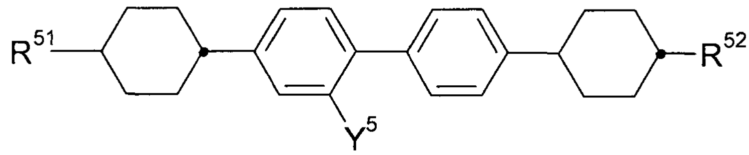

V-9

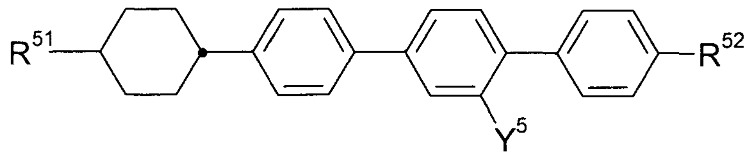

V-10

worin die Parameter die oben unter Formel V gegebenen Bedeutungen haben und

- $Y^5$ H oder F bedeutet und bevorzugt
- $R^{51}$ Alkyl mit 1 bis 7 C-Atomen oder Alkenyl mit 2 bis 7 C-Atomen und
- $R^{52}$ Alkyl mit 1 bis 7 C-Atomen, Alkenyl mit 2 bis 7 C-Atomen oder Alkoxy mit 1 bis 6 C-Atomen, bevorzugt Alkyl oder Alkenyl, besonders bevorzugt Alkenyl,

bedeuten.

In einer weiteren bevorzugten Ausführungsform enthält das Medium eine oder mehrere Verbindungen der Formel V-1, ausgewählt aus der Gruppe der Verbindungen der Formeln V-1a und V-1b, bevorzugt der Formel V-1b,

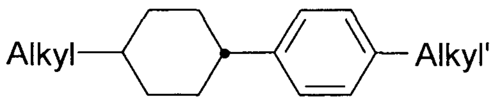

V-1a

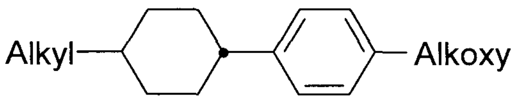

V-1b

worin

Alkyl und Alkyl' unabhängig voneinander Alkyl mit 1 bis 7 C-Atomen, bevorzugt mit 2 bis 5 C-Atomen,

Alkoxy Alkoxy mit 1 bis 5 C-Atomen, bevorzugt mit 2 bis 4 C-Atomen.

In einer weiteren bevorzugten Ausführungsform enthält das Medium eine oder mehrere Verbindungen der Formel V-3, ausgewählt aus der Gruppe der Verbindungen der Formeln V-3a und V-3b,

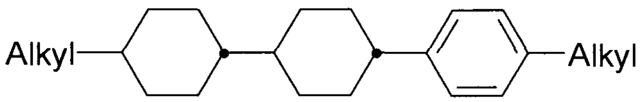

V-3a

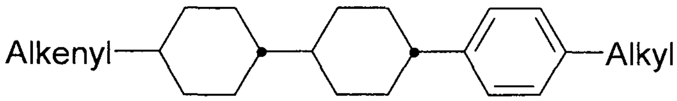

V-3b

worin
Alkyl und Alkyl' unabhängig voneinander Alkyl mit 1 bis7 C-Atomen, bevorzugt mit 2 bis 5 C-Atomen,

Alkoxy Alkoxy mit bis 1 bis 5 C-Atomen, bevorzugt mit 2 bis 4 C-Atomen und

Alkenyl Alkenyl mit 2 bis 7 C-Atomen, bevorzugt mit 2 bis 5 C-Atomen bedeuten.

In einer weiteren bevorzugten Ausführungsform enthält das Medium eine oder mehrere Verbindungen der Formel V-4 ausgewählt aus der Gruppe der Verbindungen der Formeln V-4a und V-4b,

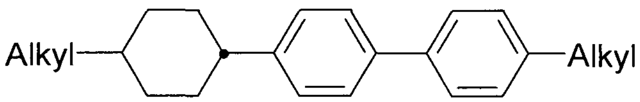

V-4a

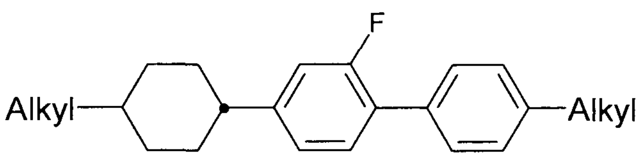

V-4a

worin

Alkyl und Alkyl' unabhängig voneinander Alkyl mit 1 bis 7 C-Atomen, bevorzugt mit 2 bis 5 C-Atomen

Alkoxy Alkoxy mit bis 1 bis 5 C-Atomen, bevorzugt mit 2 bis 4 C-Atomen und

Alkenyl Alkenyl mit 2 bis 7 C-Atomen, bevorzugt mit 2 bis 5 C-Atomen bedeuten.

In einer weiteren bevorzugten Ausführungsform enthält das Medium eine oder mehrere Verbindungen der Formel III-4-, bevorzugt der Formel III-4-a,

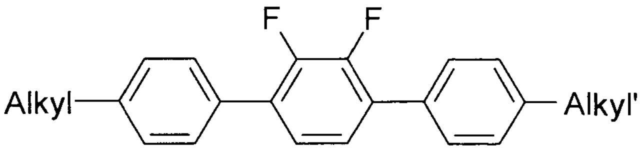

III-4-a

worin

Alkyl und Alkyl' unabhängig voneinander Alkyl mit 1 bis 7 C-Atomen, bevorzugt mit 2 bis 5 C-Atomen,

Bedeuten.

Die Flüssigkristallmedien gemäß der vorliegenden Erfindung verwendet können eine oder mehrere chirale Verbindungen enthalten.

Besonders bevorzugte Ausführungsformen der vorliegenden Erfindung erfüllen eine oder mehrere der folgenden Bedingungen,

wobei die Akronyme (Abkürzungen) in den Tabellen A bis C erläutert und in Tabelle D durch Beispiele illustriert sind.

i. Das flüssigkristalline Medium hat eine Doppelbrechung von 0,060 oder mehr, besonders bevorzugt von 0,070 oder mehr.

ii. Das flüssigkristalline Medium hat eine Doppelbrechung von 0,130 oder weniger, besonders bevorzugt von 0,120 oder weniger.

iii. Das flüssigkristalline Medium hat eine Doppelbrechung im Bereich von 0,090 oder mehr bis 0,120 oder weniger.

iv. Das flüssigkristalline Medium hat eine negative dielektrische Anisotropie mit einem Betrag von 2,0 oder mehr, besonders bevorzugt von 3,0 oder mehr.

v. Das flüssigkristalline Medium hat eine negative dielektrische Anisotropie mit einem Betrag von 5,5 oder weniger, besonders bevorzugt von 4.0 oder weniger.

vi. Das flüssigkristalline Medium hat eine negative dielektrische Anisotropie mit einem Betrag im Bereich von 2,5 oder mehr bis 3,8 oder weniger.

vii. Das flüssigkristalline Medium enthält eine oder mehrere besonders bevorzugte Verbindungen der Formeln II ausgewählt aus den nachfolgend genannten Teilformeln:

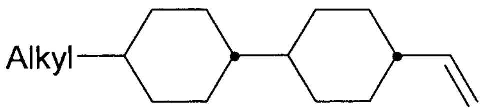

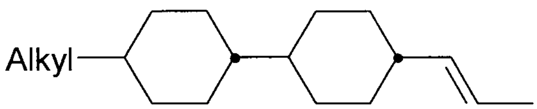

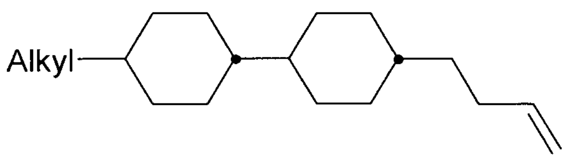

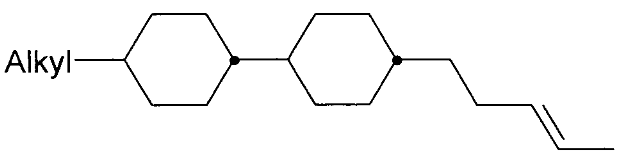

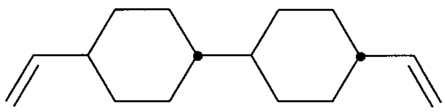

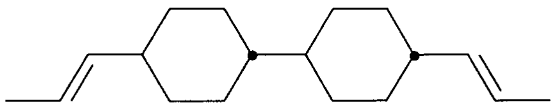

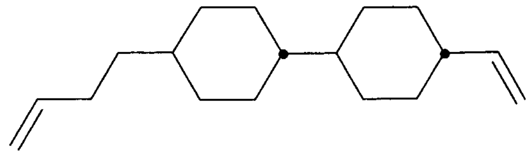

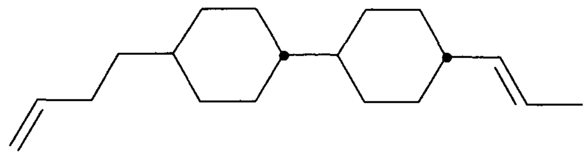

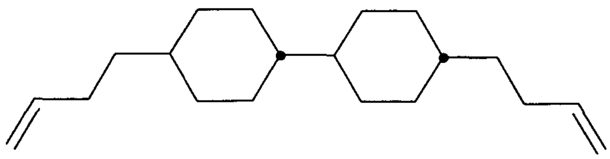

worin Alkyl die oben gegebene Bedeutung besitzt und bevorzugt, jeweils unabhängig voneinander Alkyl mit 1 bis 6, bevorzugt mit 2 bis 5 C-Atomen und besonders bevorzugt *n*-Alkyl, bedeutet.

viii. Die Gesamtkonzentration der Verbindungen der Formel II im Gesamtgemisch beträgt 25 % oder mehr, bevorzugt 30 % oder mehr und liegt bevorzugt im Bereich von 25 % oder mehr bis 49 % oder weniger, besonders bevorzugt im Bereich von 29 % oder mehr bis 47 % oder weniger, und ganz besonders bevorzugt im Bereich von 37 % oder mehr bis 44 % oder weniger.

ix. Das flüssigkristalline Medium enthält eine oder mehrere Verbindungen der Formel II ausgewählt aus der Gruppe der Verbindungen folgenden Formeln: CC-n-V und/oder CC-n-Vm, insbesondere bevorzugt CC-3-V, bevorzugt in einer Konzentration von bis zu 50 % oder weniger, besonders bevorzugt bis zu 42 % oder weniger, und optional zusätzlich CC-3-V1, bevorzugt in einer Konzentration von bis zu 15 % oder weniger, und/oder CC-4-V, bevorzugt in einer Konzentration von bis zu 20 % oder weniger, besonders bevorzugt bis zu 10 % oder weniger.

x. Die Gesamtkonzentration der Verbindungen der Formel CC-3-V im Gesamtgemisch beträgt 20 % oder mehr, bevorzugt 25 % oder mehr.

xi. Der Anteil an Verbindungen der Formeln III-1 bis III-4 im Gesamtgemisch beträgt 50 % oder mehr und bevorzugt 75 % oder weniger.

xii. Das flüssigkristalline Medium besteht im Wesentlichen aus Verbindungen der Formeln I, II, III-1 bis III-4, IV und V, bevorzugt aus Verbindungen der Formeln I, II und III-1 bis III-4.

xiii. Das flüssigkristalline Medium enthält eine oder mehrere Verbindungen der Formel IV vorzugsweise in einer Gesamtkonzentration von 5 % oder mehr, insbesondere von 10 % oder mehr, und ganz besonders bevorzugt von 15 % oder mehr bis 40 % oder weniger.

Ein weiterer Gegenstand der Erfindung ist eine elektrooptische Anzeige mit einer Aktivmatrix-Adressierung basierend auf dem VA- bzw. ECB-Effekt, dadurch gekennzeichnet, dass sie als Dielektrikum ein flüssigkristallines Medium gemäß der vorliegenden Erfindung enthält. Vorzugsweise weist die Flüssigkristallmischung einen nematischen Phasenbereich mit einer Breite von mindestens 80 Grad und eine Fließviskosität $\nu_{20}$ von maximal 30 $mm^2 \cdot s^{-1}$ bei 20 °C auf.

Die erfindungsgemäße Flüssigkristallmischung weist ein $\Delta\varepsilon$ von -0,5 bis -8,0, insbesondere von -1,5 bis -6,0 auf, und ganz besonders bevorzugt von -2,0 bis -5,0 auf, wobei $\Delta\varepsilon$ die dielektrische Anisotropie bedeutet.

Die Rotationsviskosität $\gamma_1$ ist vorzugsweise 120 mPa·s oder weniger, insbesondere 100 mPa·s oder weniger.

Die erfindungsgemäßen Mischungen sind für alle VA-TFT-Anwendungen geeignet, wie z.B. VAN, MVA, (S)-PVA und ASV. Weiterhin sind sie für IPS (In plane switching)-, FFS (Fringe field switching)- und PALC-Anwendungen mit negativem $\Delta\varepsilon$ geeignet.

Die nematischen Flüssigkristallmischungen in den erfindungsgemäßen Anzeigen enthalten in der Regel zwei Komponenten A und B, die ihrerseits aus einer oder mehreren Einzelverbindungen bestehen.

Die erfindungsgemäßen flüssigkristallinen Medien enthalten bevorzugt 4 bis 15, insbesondere 5 bis 12, und besonders bevorzugt 10 oder weniger, Verbindungen. Diese sind vorzugsweise ausgewählt aus der Gruppe der Verbindungen der Formeln I, II und III-1 bis III-4, und/oder IV und/oder V.

Die erfindungsgemäßen flüssigkristallinen Medien können optional auch mehr als 18 Verbindungen enthalten. In diesem Fall enthalten sie vorzugsweise 18 bis 25 Verbindungen.

Neben Verbindungen der Formeln I bis V können auch noch andere Bestandteile zugegen sein, z. B. in einer Menge von bis zu 45 %, vorzugsweise jedoch bis zu 35 %, insbesondere bis zu 10 %, der Gesamtmischung.

Optional können die erfindungsgemäßen Medien auch eine dielektrisch positive Komponente enthalten, deren Gesamtkonzentration bevorzugt 10 % oder weniger bezogen auf das gesamte Medium beträgt.

In einer bevorzugten Ausführungsform enthalten die erfindungsgemäßen Flüssigkristallmedien insgesamt bezogen auf die Gesamtmischung

10 ppm oder mehr bis 1000 ppm oder weniger, bevorzugt 50 ppm oder mehr bis 500 ppm oder weniger, besonders bevorzugt 100 ppm oder mehr bis 400 ppm oder weniger und ganz besonders bevorzugt 150 ppm oder mehr bis 300 ppm oder weniger, der Verbindung der Formel I.

20% oder mehr bis 60 % oder weniger, bevorzugt 25 % oder mehr bis 50 % oder weniger, besonders bevorzugt 30 % oder mehr bis 45 % oder weniger, an Verbindungen der Formel II und

50 % oder mehr bis 70 % oder weniger an Verbindungen der Formeln III-1 bis III-4.

In einer bevorzugten Ausführungsform enthalten die erfindungsgemäßen Flüssigkristallmedien Verbindungen ausgewählt aus der Gruppe der Verbindungen der Formeln I, II, III-1 bis III-4, IV und V, bevorzugt ausgewählt aus der Gruppe der Verbindungen der Formeln I, II und III-1 bis III-4, bevorzugt bestehen sie überwiegend, besonders bevorzugt im wesentlichen und ganz besonders bevorzugt nahezu vollständig aus den Verbindungen der genannten Formeln.

Die erfindungsgemäßen Flüssigkristallmedien weisen bevorzugt eine nematische Phase von jeweils mindestens von -20°C oder weniger bis 70°C oder mehr, besonders bevorzugt von -30°C oder weniger bis 80°C oder mehr, ganz besonders bevorzugt von -40°C oder weniger bis 85°C oder mehr und am allermeisten bevorzugt von -40°C oder weniger bis 90°C oder mehr auf.

Hierbei bedeutet der Begriff "eine nematische Phase aufweisen" einerseits, dass bei tiefen Temperaturen bei der entsprechenden Temperatur keine smektische Phase und keine Kristallisation beobachtet wird und andererseits, dass beim Aufheizen aus der nematischen Phase noch keine Klärung auftritt. Die Untersuchung bei tiefen Temperaturen wird in einem Fließviskosimeter bei der entsprechenden Temperatur durchgeführt sowie durch Lagerung in Testzellen einer der elektrooptischen Anwendung entsprechenden Schichtdicke für mindestens 100 Stunden überprüft. Wenn die Lagerstabilität bei einer Temperatur von -20°C in einer entsprechenden Testzelle 1.000 h oder mehr beträgt, wird das Medium als bei dieser Temperatur stabil bezeichnet. Bei Temperaturen von -30°C bzw. -40°C betragen die entsprechenden Zeiten 500 h bzw. 250 h. Bei hohen Temperaturen wird der Klärpunkt nach üblichen Methoden in Kapillaren gemessen.

In einer bevorzugten Ausführungsform sind die erfindungsgemäßen Flüssigkristallmedien durch Werte der optischen Anisotropien im mittleren bis niedrigen Bereich gekennzeichnet. Die Werte der Doppelbrechung liegen bevorzugt im Bereich von 0,065 oder mehr bis 0,130 oder weniger, besonders bevorzugt im Bereich von 0,080 oder mehr bis 0,120 oder weniger und ganz besonders bevorzugt im Bereich von 0,085 oder mehr bis 0,110 oder weniger.

In dieser Ausführungsform haben die erfindungsgemäßen Flüssigkristallmedien eine negative dielektrische Anisotropie und weisen relativ hohe Werte des Betrags der dielektrischen Anisotropie ($|\Delta\varepsilon|$) auf, die bevorzugt im Bereich von 2,7 oder mehr bis 5,3 oder weniger, bevorzugt bis 4,5 oder weniger, bevorzugt von 2,9 oder mehr bis 4,5 oder weniger, besonders bevorzugt von 3,0 oder mehr bis 4,0 oder weniger und ganz besonders bevorzugt von 3,5 oder mehr bis 3,9 oder weniger, liegen.

Die erfindungsgemäßen Flüssigkristallmedien weisen relativ kleine Werte für die Schwellenspannung (Vo) im Bereich von 1,7 V oder mehr bis 2,5 V oder weniger, bevorzugt von 1,8 V oder mehr bis 2,4 V oder weniger, besonders bevorzugt von 1,9 V oder mehr bis 2,3 V oder weniger und ganz besonders bevorzugt von 1,95 V oder mehr bis 2,1 V oder weniger, auf.

In einer weiteren bevorzugten Ausführungsform weisen die erfindungsgemäßen Flüssigkristallmedien bevorzugt relativ niedrige Werte der mittleren dielektrischen Anisotropie ($\varepsilon_{av.} \equiv (\varepsilon\| + 2\varepsilon\perp)/3$) auf, die bevorzugt im Bereich von 5,0 oder mehr bis 7,0 oder weniger, bevorzugt von 5,5 oder mehr bis 6,5 oder weniger, noch mehr bevorzugt von 5,7 oder mehr bis 6,4 oder weniger, besonders bevorzugt von 5,8 oder mehr bis 6,2 oder weniger und ganz besonders bevorzugt von 5,9 oder mehr bis 6,1 oder weniger, liegen.

Außerdem weisen die erfindungsgemäßen Flüssigkristallmedien hohe Werte für die VHR in Flüssigkristallzellen auf.
Diese sind in frisch gefüllten Zellen bei 20°C in den Zellen größer oder gleich 95 %, bevorzugt größer oder gleich 97 %, besonders bevorzugt größer oder gleich 98 % und ganz besonders bevorzugt größer oder gleich 99 % und nach 5 Minuten im Ofen bei 100°C in den Zellen größer oder gleich 90 %, bevorzugt größer oder gleich 93 %, besonders bevorzugt größer oder gleich 96 % und ganz besonders bevorzugt größer oder gleich 98 %.

In der Regel weisen dabei Flüssigkristallmedien mit einer geringen Ansteuerspannung bzw. Schwellenspannung eine geringere VHR auf als solche mit einer größeren Ansteuerspannung bzw. Schwellenspannung und umgekehrt.

Diese bevorzugten Werte für die einzelnen physikalischen Eigenschaften werden von den erfindungsgemäßen Medien bevorzugt auch jeweils miteinander kombiniert eingehalten.

In der vorliegenden Anmeldung bedeutet der Begriff "Verbindungen", auch geschrieben als "Verbindung(en)", sofern nicht explizit anders angegeben, sowohl eine als auch mehrere Verbindungen.

Die einzelnen Verbindungen werden, sofern nichts anderes angegeben, in den Mischungen in Konzentrationen generell jeweils von 1 % oder mehr bis 30 % oder weniger, bevorzugt von 2 % oder mehr bis 30 % oder weniger und besonders bevorzugt von 3 % oder mehr bis 16 % oder weniger eingesetzt.

In einer bevorzugten Ausführungsform enthalten die erfindungsgemäßen flüssigkristallinen Medien
die Verbindung der Formel I,
eine oder mehrere Verbindungen der Formel II, bevorzug ausgewählt aus der Gruppe der Verbindungen der Formeln CC-n-V und CC-n-Vm, bevorzugt CC-3-V, CC-3-V1, CC-4-V und CC-5-V, besonders bevorzugt ausgewählt aus der Gruppe der Verbindungen CC-3-V, CC-3-V1 und CC-4-V, ganz besonders bevorzugt der Verbindung CC-3-V und gegebenenfalls zusätzlich der Verbindung CC-4-V und/oder CC-3-V1,
eine oder mehrere Verbindungen der Formel III-1-1, bevorzugt der Formel CY-n-Om, ausgewählt aus der Gruppe der Verbindungen der Formeln CY-3-O2, CY-3-O4, CY-5-O2 und CY-5-O4,
eine oder mehrere Verbindungen der Formel III-1-2, bevorzugt ausgewählt aus der Gruppe der Verbindungen der Formel CCY-n-m und CCY-n-Om, bevorzugt der Formel CCY-n-Om, bevorzugt ausgewählt aus der Gruppe der Verbindungen der Formeln CCY-3-O2, CCY-2-O2, CCY-3-O1, CCY-3-O3, CCY-4-O2, CCY-3-O2 und CCY-5-O2,
optional, bevorzugt obligatorisch, eine oder mehrere Verbindungen der Formel III-2-2, bevorzugt der Formel CLY-n-Om, bevorzugt ausgewählt aus der Gruppe der Verbindungen der Formeln CLY-2-O4, CLY-3-O2, CLY-3-O3,
eine oder mehrere Verbindungen der Formel III-3-2, bevorzugt der Formel CPY-n-Om, bevorzugt ausgewählt aus der Gruppe der Verbindungen der Formeln CPY-2-O2 und CPY-3-O2, CPY-4-O2 und CPY-5-O2,
eine oder mehrere Verbindungen der Formel III-4, bevorzugt der Formel PYP-n-m, bevorzugt ausgewählt aus der Gruppe der Verbindungen der Formeln PYP-2-3 und PYP-2-4.

Für die vorliegende Erfindung bedeutet im Zusammenhang mit der Angabe der Bestandteile der Zusammensetzungen, wenn nicht im Einzelfall anders angegeben:

- "enthalten": die Konzentration der betreffenden Bestandteile in der Zusammensetzung beträgt bevorzugt 5 % oder mehr, besonders bevorzugt 10 % oder mehr, ganz besonders bevorzugt 20 % oder mehr,

- "überwiegend bestehen aus": die Konzentration der betreffenden Bestandteile in der Zusammensetzung beträgt bevorzugt 50 % oder mehr, besonders bevorzugt 55 % oder mehr und ganz besonders bevorzugt 60 % oder mehr,

- "im wesentlichen bestehen aus": die Konzentration der betreffenden Bestandteile in der Zusammensetzung beträgt bevorzugt 80 % oder mehr, besonders bevorzugt 90 % oder mehr und ganz besonders bevorzugt 95 % oder mehr und

- "nahezu vollständig bestehen aus": die Konzentration der betreffenden Bestandteile in der Zusammensetzung beträgt bevorzugt 98 % oder mehr, besonders bevorzugt 99 % oder mehr und ganz besonders bevorzugt 100,0 %.

Dies gilt sowohl für die Medien als Zusammensetzungen mit ihren Bestandteilen, die Komponenten und Verbindungen sein können, als auch für die Komponenten mit ihren Bestandteilen, den Verbindungen. Lediglich in Bezug auf die Konzentration einer einzelnen Verbindung im Verhältnis zum gesamten Medium bedeutet der Begriff enthalten: die Konzentration der betreffenden Verbindung beträgt bevorzugt 1 % oder mehr, besonders bevorzugt 2 % oder mehr, ganz besonders bevorzugt 4 % oder mehr.

Für die vorliegende Erfindung bedeutet "≤" kleiner oder gleich, bevorzugt kleiner und "≥" größer oder gleich,

bevorzugt größer.

Für die vorliegende Erfindung bedeuten

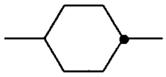 , 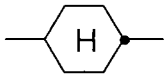 und 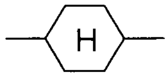

trans-1,4-Cyclohexylen und

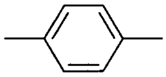 und 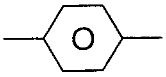

1,4-Phenylen.

Für die vorliegende Erfindung bedeuten die Begriffe "dielektrisch positive Verbindungen" solche Verbindungen mit einem $\Delta\varepsilon > 1,5$, "dielektrisch neutrale Verbindungen" solche mit $-1,5 \leq \Delta\varepsilon \leq 1,5$ und "dielektrisch negative" Verbindungen solche mit $\Delta\varepsilon < -1,5$. Hierbei wird die dielektrische Anisotropie der Verbindungen bestimmt, indem 10 % der Verbindungen in einem flüssigkristallinen Host gelöst werden und von der resultierenden Mischung die Kapazität in mindestens jeweils einer Testzelle mit 20 $\mu$m Schichtdicke mit homeotroper und mit homogener Oberflächenorientierung bei 1 kHz bestimmt wird. Die Messspannung beträgt typischerweise 0,5 V bis 1,0 V, sie ist jedoch stets niedriger als die kapazitive Schwelle der jeweiligen untersuchten Flüssigkristallmischung.

Als Hostmischung für dielektrisch positive und dielektrisch neutrale Verbindungen wird ZLI-4792 und für dielektrisch negative Verbindungen ZLI-2857, beide von Merck KGaA, Deutschland, verwendet. Aus der Änderung der Dielektrizitätskonstante der Hostmischung nach Zugabe der zu untersuchenden Verbindung und Extrapolation auf 100 % der eingesetzten Verbindung werden die Werte für die jeweiligen zu untersuchenden Verbindungen erhalten. Die zu untersuchende Verbindung wird zu 10 % in der Hostmischung gelöst. Wenn die Löslichkeit der Substanz hierzu zu gering ist, wird die Konzentration schrittweise solange halbiert, bis die Untersuchung bei der gewünschten Temperatur erfolgen kann. Die erfindungsgemäßen Flüssigkristallmedien können bei Bedarf auch weitere Zusatzstoffe wie z. B. Stabilisatoren und/oder pleochroitische Farbstoffe und/oder chirale Dotierstoffe in den üblichen Mengen enthalten. Die eingesetzte Menge dieser Zusatzstoffe beträgt bevorzugt insgesamt 0 % oder mehr bis 10 % oder weniger bezogen auf die Menge der gesamten Mischung, besonders bevorzugt 0,1 % oder mehr bis 6 % oder weniger. Die Konzentration der einzelnen eingesetzten Verbindungen beträgt bevorzugt 0,1 % oder mehr bis 3 % oder weniger. Die Konzentration dieser und ähnlicher Zusatzstoffe wird bei der Angabe der Konzentrationen sowie der Konzentrationsbereiche der Flüssigkristallverbindungen in den Flüssigkristallmedien in der Regel nicht berücksichtigt.

In einer bevorzugten Ausführungsform enthalten die erfindungsgemäßen Flüssigkristallmedien einen Polymervorläufer, der eine oder mehrere reaktive Verbindungen, bevorzugt reaktive Mesogene und bei Bedarf auch weitere Zusatzstoffe wie z. B. Polymerisationsinitiatoren und/oder Polymerisationsmoderatore in den üblichen Mengen enthalten. Die eingesetzte Menge dieser Zusatzstoffe beträgt insgesamt 0 % oder mehr bis 10 % oder weniger bezogen auf die Menge der gesamten Mischung bevorzugt 0,1 % oder mehr bis 2 % oder weniger. Die Konzentration dieser und ähnlicher Zusatzstoffe wird bei der Angabe der Konzentrationen sowie der Konzentrationsbereiche der Flüssigkristallverbindungen in den Flüssigkristallmedien nicht berücksichtigt.

Die Zusammensetzungen bestehen aus mehreren Verbindungen, bevorzugt aus 3 oder mehr bis 30 oder weniger, besonders bevorzugt aus 6 oder mehr bis 20 oder weniger und ganz besonders bevorzugt aus 10 oder mehr bis 16 oder weniger Verbindungen, die auf herkömmliche Weise gemischt werden. In der Regel wird die gewünschte Menge der in geringerer Menge verwendeten Komponenten in den Komponenten gelöst, die den Hauptbestandteil der Mischung ausmachenden. Dies erfolgt zweckmäßigerweise bei erhöhter Temperatur. Liegt die gewählte Temperatur über dem Klärpunkt des Hauptbestandteils, so ist die Vervollständigung des Lösungsvorgangs besonders leicht zu beobachten. Es ist jedoch auch möglich, die Flüssigkristallmischungen auf anderen üblichen Wegen, z. B. unter Verwendung von Vormischungen oder aus einem so genannten "Multi Bottle System" herzustellen.

Die erfindungsgemäßen Mischungen zeigen sehr breite nematische Phasenbereiche mit Klärpunkten 65°C oder mehr, sehr günstige Werte für die kapazitive Schwelle, relativ hohe Werte für die Holding Ratio und gleichzeitig sehr gute Tieftemperaturstabilitäten bei -30°C und -40°C. Weiterhin zeichnen sich die erfindungsgemäßen Mischungen durch niedrige Rotationsviskositäten $\gamma_1$ aus.

Es versteht sich für den Fachmann von selbst, dass die erfindungsgemäßen Medien für die Verwendung in VA-, IPS-, FFS- oder PALC-Anzeigen auch Verbindungen enthalten kann, worin beispielsweise H, N, O, Cl, F durch die entsprechenden Isotope ersetzt sind.

Der Aufbau der erfindungsgemäßen Flüssigkristallanzeigen entspricht der üblichen Geometrie, wie sie z. B. in EP-OS 0 240 379, beschrieben wird. Mittels geeigneter Zusatzstoffe können die erfindungsgemäßen Flüssigkristallphasen derart modifiziert werden, dass sie in jeder bisher bekannt gewordenen Art von z. B. ECB-, VAN-, IPS-, GH- oder ASM-VA-LCD-Anzeige einsetzbar sind.

In der nachfolgenden Tabelle E werden mögliche Dotierstoffe angegeben, die den erfindungsgemäßen Mischungen zugesetzt werden können. Sofern die Mischungen einen oder mehrere Dotierstoffe enthalten, wird er in Mengen von 0,01 % bis 4 %, vorzugsweise 0,1 % bis 1,0 %, eingesetzt.

Stabilisatoren, die beispielsweise den erfindungsgemäßen Mischungen zugesetzt werden können, vorzugsweise in Mengen von 0,01 % bis 6 %, insbesondere 0,1 % bis 3 %, werden nachfolgend in Tabelle F genannt.

Alle Konzentrationen sind für die Zwecke der vorliegenden Erfindung, soweit nicht explizit anders vermerkt, in Massenprozent angegeben und beziehen sich auf die entsprechende Mischung oder Mischungskomponente, soweit nicht explizit anders angegeben.

Alle angegebenen Werte für Temperaturen in der vorliegenden Anmeldung, wie z. B. der Schmelzpunkt T(C,N), der Übergang von der smektischen (S) zur nematischen (N) Phase T(S,N) und der Klärpunkt T(N,I), sind in Grad Celsius (°C) und alle Temperaturdifferenzen entsprechend Differenzgrad (°oder Grad) angegeben, sofern nicht explizit anders angegeben.

Der Begriff "Schwellenspannung" bezieht sich für die vorliegende Erfindung auf die kapazitive Schwelle ($V_0$), auch Freedericksz-Schwelle genannt, sofern nicht explizit anders angegeben.

Alle physikalischen Eigenschaften werden und wurden nach "Merck Liquid Crystals, Physical Properties of Liquid Crystals", Status Nov. 1997, Merck KGaA, Deutschland bestimmt und gelten für eine Temperatur von 20°C und $\Delta n$ wird bei 589 nm und $\Delta\varepsilon$ bei 1 kHz bestimmt, sofern nicht jeweils explizit anders angegeben.

Die elektrooptischen Eigenschaften, z. B. die Schwellenspannung ($V_0$) (kapazitive Messung) werden, ebenso wie das Schaltverhalten, in bei der Merck Japan$^{Ltd}$. hergestellten Testzellen bestimmt. Die Messzellen haben Substrate aus Natriumglas (Sodalime Glas) und sind in einer ECB- bzw. VA-Konfiguration mit Polyimidorientierungsschichten (SE-1211 mit Verdünner **26 (Mischungsverhältnis 1:1) beide der Firma Nissan Chemicals, Japan), die senkrecht zueinander gerieben sind und die eine homöotrope Orientierung der Flüssigkristalle bewirken, ausgeführt. Die Fläche der durchsichtigen, nahezu quadratischen Elektroden aus ITO beträgt 1 $cm^2$.

Die verwendeten Flüssigkristallmischungen sind, wenn nicht anders angegeben, nicht mit einem chiralen Dotierstoff versetzt, sie eignen sich aber auch besonders für Anwendungen, in denen eine solche Dotierung erforderlich ist.

Die VHR wird in bei der Merck Japan$^{Ltd}$. hergestellten Testzellen bestimmt. Die Messzellen haben Substrate aus Natriumglas (Sodalime Glas) und sind mit Polyimidorientierungsschichten (AL-3046 der Firma Japan Synthetic Rubber, Japan) mit einer Schichtdicke von 50 nm, die senkrecht zueinander gerieben sind ausgeführt. Die Schichtdicke beträgt einheitlich 6,0 $\mu$m. Die Fläche der durchsichtigen Elektroden aus ITO beträgt 1 $cm^2$.

Die VHR wird bei 20°C ($VHR_{20}$) und nach 5 Minuten im Ofen bei 100°C ($VHR_{100}$) in einem kommerziell erhältlichen Gerät der Firma Autronic Melchers, Deutschland bestimmt. Die verwendete Spannung hat eine Frequenz von 60 Hz.

Die Genauigkeit der Messwerte der VHR hängt vom jeweiligen Wert der VHR ab. Dabei nimmt die Genauigkeit mit geringer werdenden Werten ab. Die bei Werten in den verschiedenen Größenbereichen in der Regel beobachten Abweichungen sind in ihrer Größenordnung in der folgenden Tabelle zusammen gestellt.

| VHR-Bereich | | Abweichung |
|---|---|---|
| VHR-Werte | | (relativ) /% |
| von | bis | |
| 99,6 % | 100 % | +/- 0,1 |
| 99,0 % | 99,6 % | +/- 0,2 |
| 98 % | 99 % | +/- 0,3 |
| 95 % | 98 % | +/- 0,5 |
| 90 % | 95 % | +/-1 |
| 80 % | 95 % | +/- 2 |
| 60 % | 80 % | +/- 4 |
| 40 % | 60 % | +/- 8 |
| 20 % | 40 % | +/- 10 |

(fortgesetzt)

| VHR-Bereich | | Abweichung |
|---|---|---|
| VHR-Werte | | (relativ) /% |
| von | bis | |
| 10 % | 20 % | +/- 20 |

Die Stabilität gegen Bestrahlung mit UV wird in einem "Suntest CPS" einem kommerziellen Gerät der Firma Heraeus, Deutschland untersucht. Dabei werden die versiegelten Testzellen 2,0 Stunden ohne zusätzliche thermische Belastung bestrahlt. Die Bestrahlungsleistung im Wellenlängebereich von 300 nm bis 800 nm beträgt 765 $W/m^2$ V. Es wird ein UV "cut-off" Filter mit einer Kantenwellenlänge von 310 nm verwendet um den sogenannten Fensterglasmodus (Englisch: "window glass mode") zu simulieren. Bei jeder Versuchsserie werden für jede Bedingung mindestens vier Testzellen untersucht und die jeweiligen Ergebnisse werden als Mittelwerte der entsprechenden einzelnen Messungen angegeben.

Die üblicherweise durch die Belastung, z.B. durch Bestrahlung mit UV durch eine LCD-Hintergrundbeleuchtung, verursachte Abnahme der Voltage Holding Ratio (ΔVHR) wird nach der folgenden Gleichung (1) bestimmt:

$$\Delta VHR(t) = VHR(t) - VHR(t=0) \qquad (1).$$

Die relative Stabilität ($S_{rel}$) einer LC Mischung gegenüber einer Belastung für eine Zeit t bestimmt man gemäß der folgenden Gleichung, Gleichung (2):

$$S_{rel}(t) = \frac{VHRref(t=0) - VHRref(t)}{VHR(t=0) - VHR(t)} \qquad (2),$$

wobei "ref" für die entsprechende unstabilisierte Mischung steht.

Die Rotationsviskosität wird mit der Methode des rotierenden Permanentmagneten und die Fließviskosität in einem modifizierten Ubbelohde-Viskosimeter bestimmt. Für die Flüssigkristallmischungen ZLI-2293, ZLI-4792 und MLC-6608, alle Produkte der Firma Merck KGaA, Darmstadt, Deutschland, betragen die bei 20°C bestimmten Werte der Rotationsviskosität 161 mPa·s, 133 mPa·s bzw. 186 mPa·s und die der Fließviskosität (v) 21 $mm^2 \cdot s^{-1}$, 14 $mm^2 \cdot s^{-1}$ bzw. 27 $mm^2 \cdot s^{-1}$.

Es werden, wenn nicht explizit anders angegeben, die folgenden Symbole verwendet:

| | |
|---|---|
| $V_o$ | Schwellenspannung, kapazitiv [V] bei 20°C, |
| $n_e$ | außerordentlicher Brechungsindex gemessen bei 20°C und 589 nm, |
| $n_o$ | ordentlicher Brechungsindex gemessen bei 20°C und 589 nm, |
| $\Delta n$ | optische Anisotropie gemessen bei 20°C und 589 nm, |
| $\varepsilon\perp$ | dielektrische Suszeptibilität senkrecht zum Direktor bei 20°C und 1 kHz, |
| $\varepsilon\|$ | dielektrische Suszeptibilität parallel zum Direktor bei 20°C und 1 kHz, |
| $\Delta\varepsilon$ | dielektrische Anisotropie bei 20°C und 1 kHz, |
| cp. bzw. T(N,I) | Klärpunkt [°C], |
| $\nu$ | Fließviskosität gemessen bei 20°C [$mm^2 \cdot s^{-1}$], |
| $\gamma_1$ | Rotationsviskosität gemessen bei 20°C [mPa·s], |
| $K_1$ | elastische Konstante, "splay"-Deformation bei 20°C [pN], |
| $K_2$ | elastische Konstante, "twist"-Deformation bei 20°C [pN], |
| $K_3$ | elastische Konstante, "bend"-Deformation bei 20°C [pN] und |
| LTS | Tieftemperaturstabilität der Phase ("low temperature stability"), bestimmt in Testzellen, |
| VHR | Spannungshaltevermögen ("voltage holding ratio"), |
| ΔVHR | Abnahme der Voltage Holding Ratio, |
| $S_{rel}$ | relative Stabilität der VHR. |

Die folgenden Beispiele erläutern die vorliegende Erfindung ohne sie zu begrenzen. Sie zeigen dem Fachmann jedoch bevorzugte Mischungskonzepte mit bevorzugt einzusetzenden Verbindungen und deren jeweiligen Konzentrationen sowie deren Kombinationen miteinander. Außerdem illustrieren die Beispiele, welche Eigenschaften und Eigenschaftskombinationen zugänglich sind.

Für die vorliegende Erfindung und in den folgenden Beispielen sind die Strukturen der Flüssigkristallverbindungen durch Acronyme angegeben, wobei die Transformation in chemische Formeln gemäß folgender Tabellen A bis C erfolgt. Alle Reste $C_nH_{2n+1}$, $C_mH_{2m+1}$ und $C_lH_{2l+1}$ bzw. $C_nH_{2n}$, $C_mH_{2m}$ und $C_lH_{2l}$ sind geradkettige Alkylreste bzw. Alkylenreste jeweils mit n, m bzw. l C-Atomen. In Tabelle A sind die Ringelemente der Kerne der Verbindung codiert, in Tabelle B sind die Brückenglieder aufgelistet und in Tabelle C sind die Bedeutungen der Symbole für die linken bzw. rechten Endgruppen der Moleküle aufgelistet. Die Akronyme werden aus den Codes für die Ringelemente mit optionalen Verknüpfungsgruppen, gefolgt von einem ersten Bindestrich und den Codes für die linke Endgruppe, sowie einem zweiten Bindestrich und den Codes für die rechts Endgruppe, zusammengesetzt. In Tabelle D sind Beispielstrukturen von Verbindungen mit ihren jeweiligen Abkürzungen zusammengestellt.

**Tabelle A: Ringelemente**

| | | | |
|---|---|---|---|
| **C** | 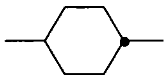 | | |
| **D** | 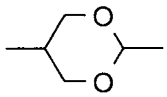 | **DI** | 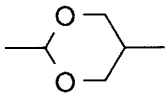 |
| **A** | 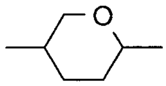 | **AI** | 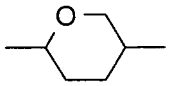 |
| **P** | 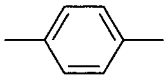 | | |
| **G** | 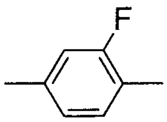 | **GI** | 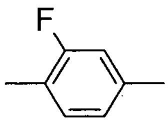 |
| **U** | 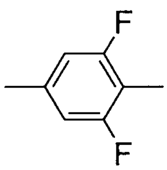 | **UI** | 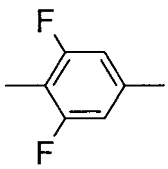 |
| **Y** | 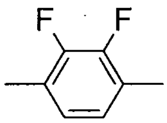 | | |
| **P(F, Cl)Y** | 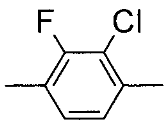 | **P(Cl,F)Y** | 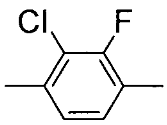 |
| **np** | 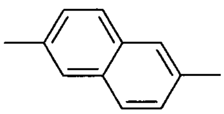 | | |
| **n3f** | 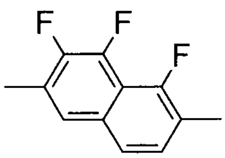 | **nN3fI** | 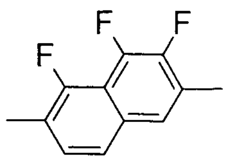 |
| **th** | 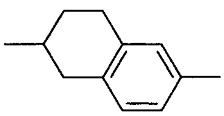 | **thI** | 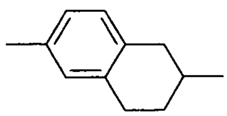 |

(fortgesetzt)

| | | | |
|---|---|---|---|
| **tH2f** | 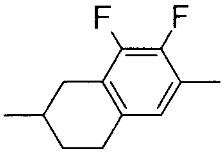 | **tH2fl** | 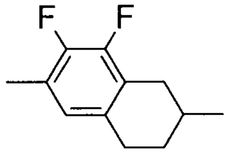 |
| **o2f** | 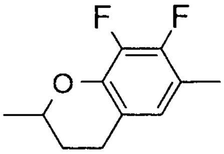 | **o2fl** | 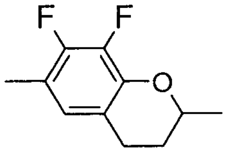 |
| **dh** | 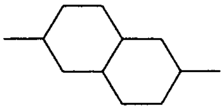 | | |
| **K** | 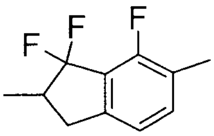 | **Kl** | 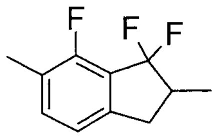 |
| **L** | 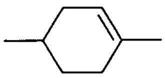 | **Ll** | 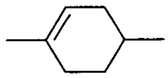 |
| **F** | 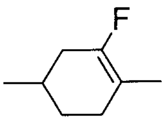 | **Fl** | 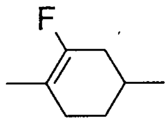 |

**Tabelle B: Brückenglieder**

| | | | |
|---|---|---|---|
| **E** | $-CH_2-CH_2-$ | | |
| **V** | -CH=CH- | | |
| **T** | $-C\equiv C-$ | | |
| **W** | $-CF_2-CF_2-$ | | |
| **B** | -CF=CF- | | |
| **Z** | -CO-O- | **ZI** | -O-CO- |
| **X** | -CF=CH- | **XI** | -CH=CF- |
| **O** | $-CH_2-O-$ | **OI** | $-O-CH_2-$ |
| **Q** | $-CF_2-O-$ | **QI** | $-O-CF_2-$ |

**Tabelle C: Endgruppen**

| Links einzelstehend oder in Kombination | | Rechts einzelstehend oder in Kombination | |
|---|---|---|---|
| **-n-** | $C_nH_{2n+1}-$ | **-n** | $-C_nH_{2n+1}$ |
| **-nO-** | $C_nH_{2n+1}-O-$ | **-nO** | $-O-C_nH_{2n+1}$ |
| **-V-** | $CH_2=CH-$ | **-V** | $-CH=CH_2$ |
| **-nV-** | $C_nH_{2n+1}-CH=CH-$ | **-nV** | $-C_nH_{2n-}CH=CH_2$ |
| **-Vn-** | $CH_2=CH-\ C_nH_{2n}-$ | **-Vn** | $-CH=CH-C_nH_{2n+1}$ |
| **-nVm-** | $C_nH_{2n+1}-CH=CH-C_mH_{2m}-$ | **-nVm** | $-C_nH_{2n}-CH=CH-C_mH_{2m+1}$ |
| **-N-** | $N\equiv C-$ | **-N** | $-C\equiv N$ |
| **-S-** | S=C=N- | **-S** | -N=C=S |
| **-F-** | F- | **-F** | -F |
| **-CL-** | Cl- | **-CL** | -Cl |

(fortgesetzt)

| Links einzelstehend oder in Kombination | | Rechts einzelstehend oder in Kombination | |
|---|---|---|---|
| **-M-** | $CFH_2$- | **-M** | -$CFH_2$ |
| **-D-** | $CF_2H$- | **-D** | -$CF_2H$ |
| **-T-** | $CF_3$- | **-T** | -$CF_3$ |
| **-MO-** | $CFH_2O$- | **-OM** | -$OCFH_2$ |
| **-DO-** | $CF_2HO$- | **-OD** | -$OCF_2H$ |
| **-TO-** | $CF_3O$- | **-OT** | -$OCF_3$ |
| **-A-** | H-C≡C- | **-A** | -C≡C-H |
| **-nA-** | $C_nH2_{n+1}$-C≡C- | **-An** | -C≡C-$C_nH_{2n+1}$ |
| **-NA-** | N≡C-C≡C- | **-AN** | -C≡C-C≡N |

| Links nur in Kombination | | Rechts nur in Kombination | |
|---|---|---|---|
| **-...n...-** | -$C_nH_{2n}$- | **-...n...** | -$C_nH_{2n}$- |
| **-...M...-** | -CFH- | **-...M...** | -CFH- |
| **-...D...-** | -$CF_2$- | **-...D...** | -$CF_2$- |
| **-...V...-** | -CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **...W...** | -CF=CF- |

worin n und m jeweils ganze Zahlen und die drei Punkte "..." Platzhalter für andere Abkürzungen aus dieser Tabelle sind.

Vorzugsweise enthalten die erfindungsgemäßen Mischungen neben den Verbindungen der Formeln I eine oder mehrere Verbindungen der nachfolgend genannten Verbindungen.

Folgende Abkürzungen werden verwendet:

(n, m und z unabhängig voneinander jeweils eine ganze Zahl, bevorzugt 1 bis 6)

**Tabelle D**

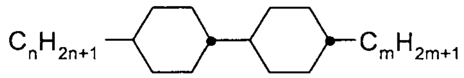

**CC-n-m**

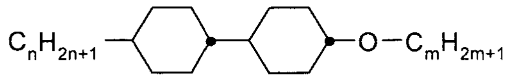

**CC-n-Om**

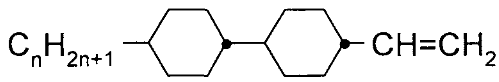

**CC-n-V**

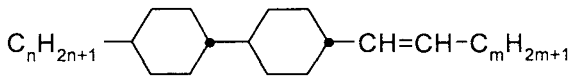

**CC-n-Vm**

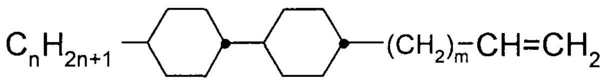

**CC-n-mV**

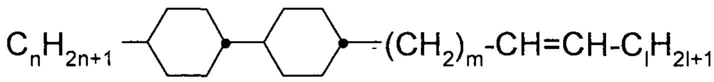

**CC-n-mVl**

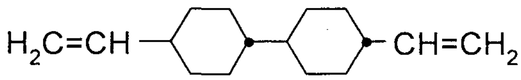

**CC-V-V**

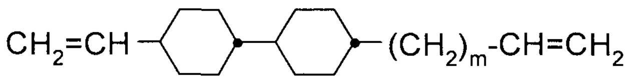

**CC-V-mV**

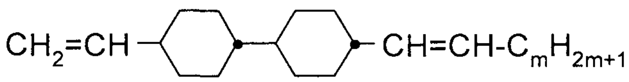

**CC-V-Vm**

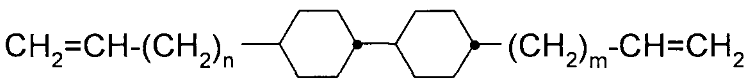

**CC-Vn-mV**

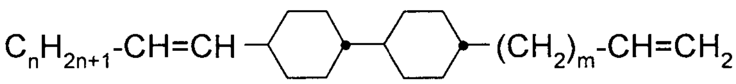

**CC-nV-mV**

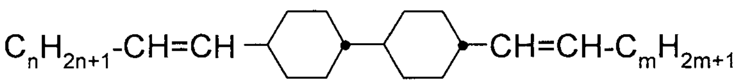

**CC-nV-Vm**

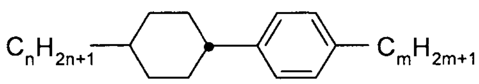

**CP-n-m**

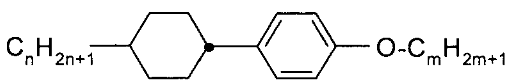

**CP-n-Om**

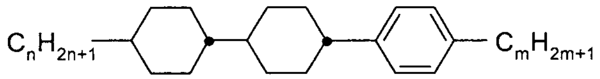

**CCP-n-m**

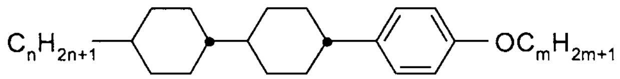

**CCP-n-Om**

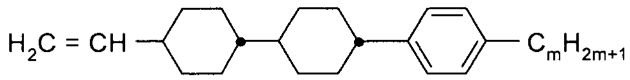

**CCP-V-m**

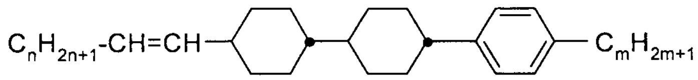

**CCP-nV-m**

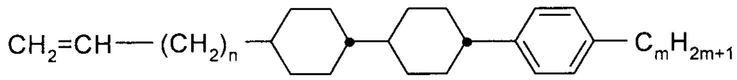

**CCP-Vn-m**

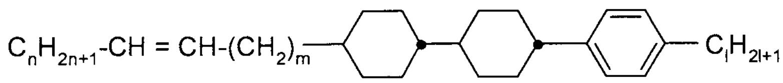

**CCP-nVm-l**

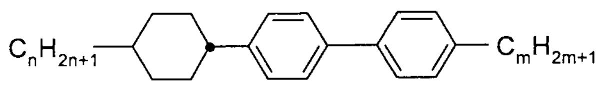

**CPP-n-m**

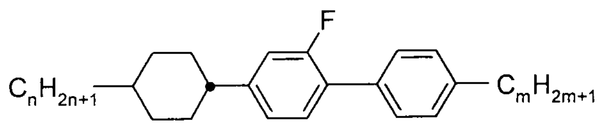

**CGP-n-m**

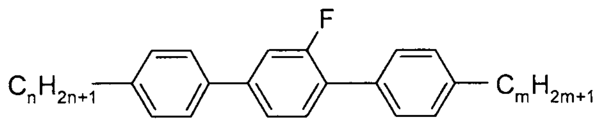

**PGP-n-m**

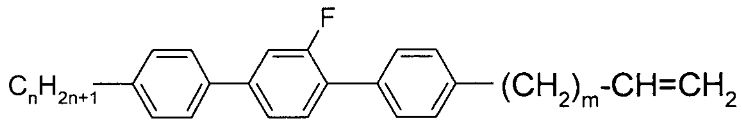

**PGP-n-mV**

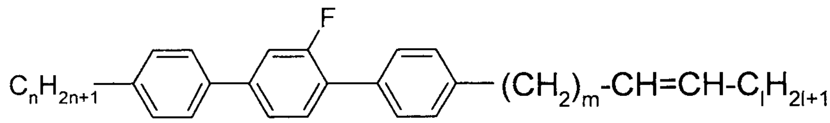

**PGP-n-mVl**

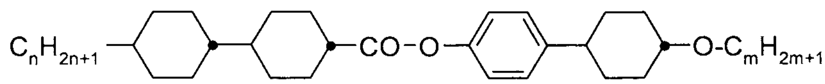

**CCZPC-n-m**

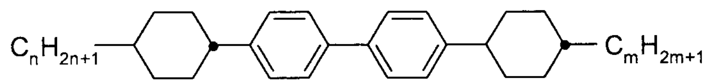

**CPPC-n-m**

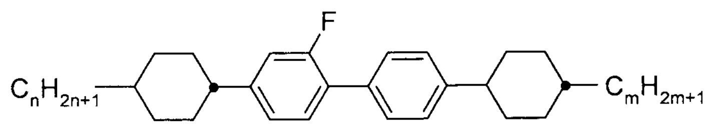

**CGPC-n-m**

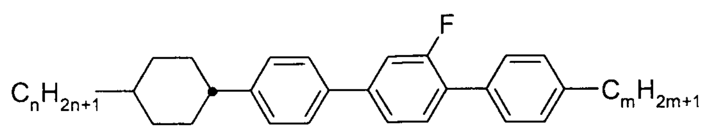

**CPGP-n-m**

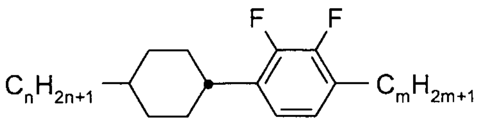

**CY-n-m**

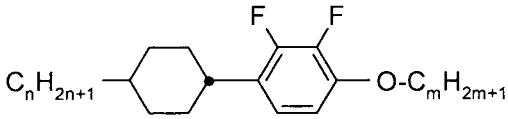

**CY-n-Om**

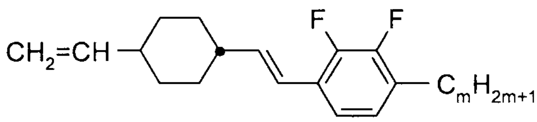

**CVY-n-m**

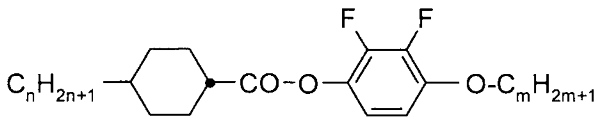

**CZY-n-Om**

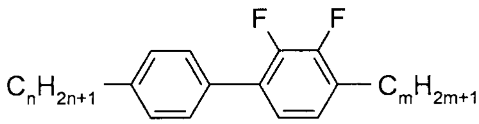

**PY-n-m**

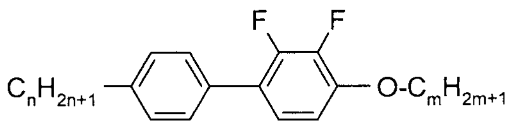

**PY-n-Om**

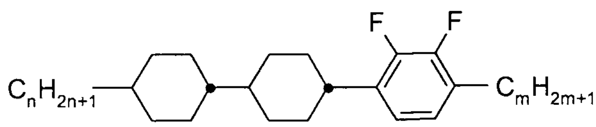

**CCY-n-m**

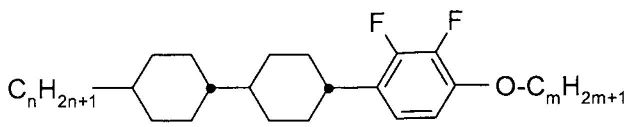

**CCY-n-Om**

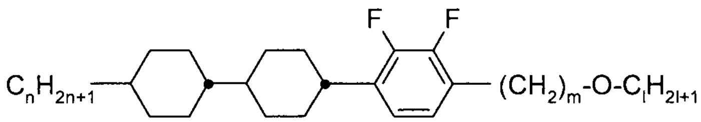

**CCY-n-mOl**

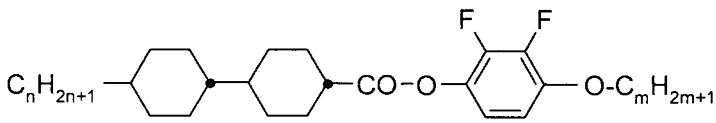

**CCZY-n-Om**

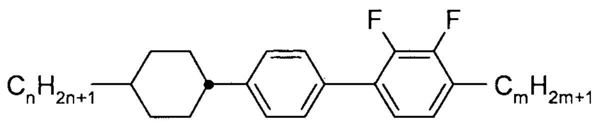

**CPY-n-m**

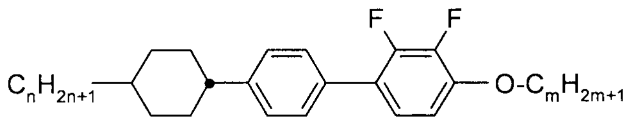

**CPY-n-Om**

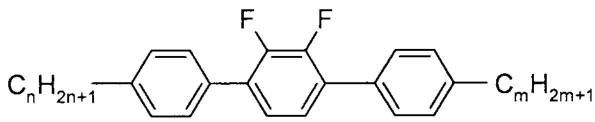

**PYP-n-m**

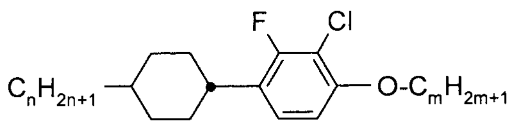

**CP(F,Cl)-n-Om**

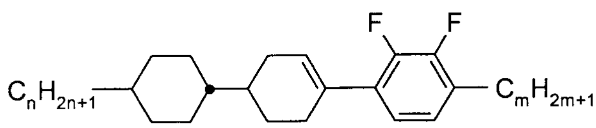

**CLY-n-m**

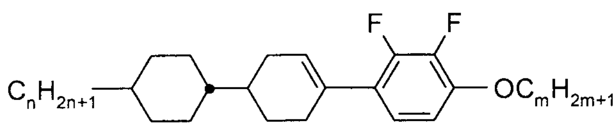

**CLY-n-Om**

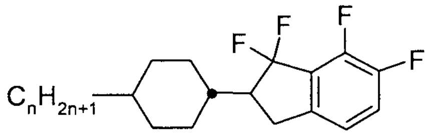

**CK-n-F**

In der Tabelle E werden chirale Dotierstoffe genannt, die bevorzugt in den erfindungsgemäßen Mischungen eingesetzt werden.

## Tabelle E

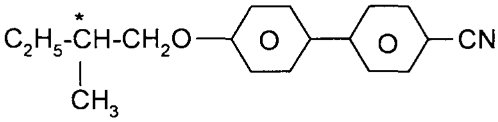

**C 15**

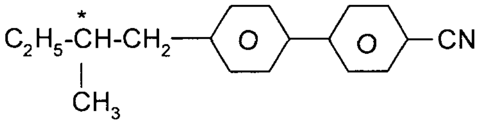

**CB 15**

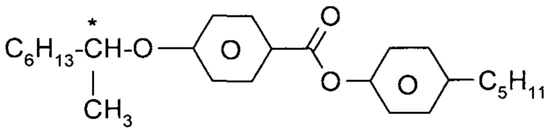

**CM 21**

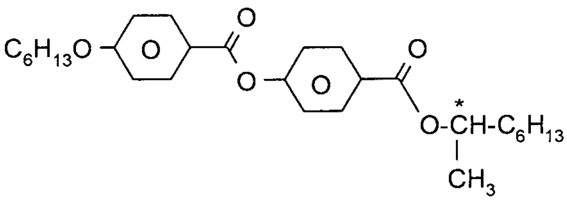

**R S-811 / S-811**

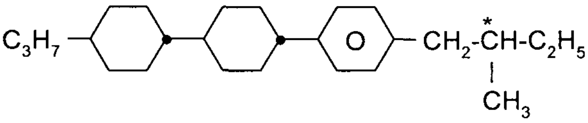

**CM 44**

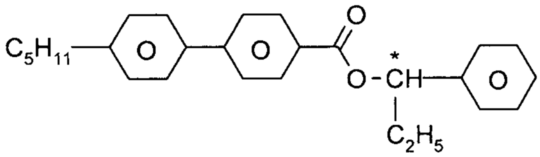

**CM 45**

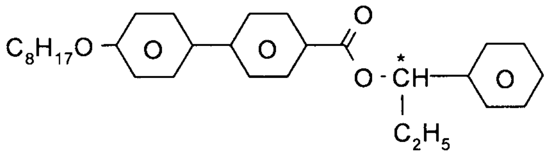

**CM 47**

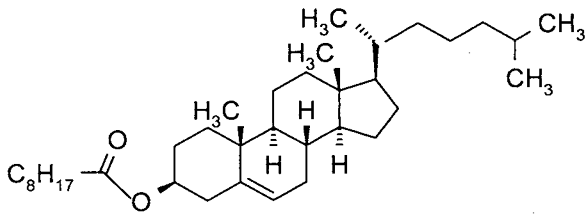

**CN**

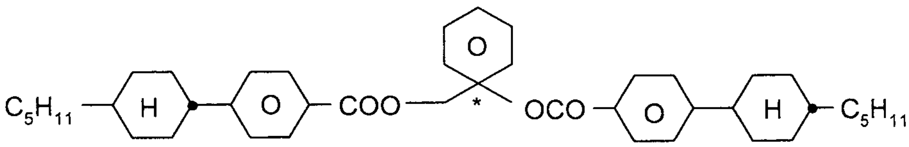

**R-1011 / S-1011**

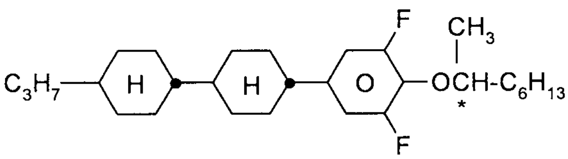

**R-2011 / S-2011**

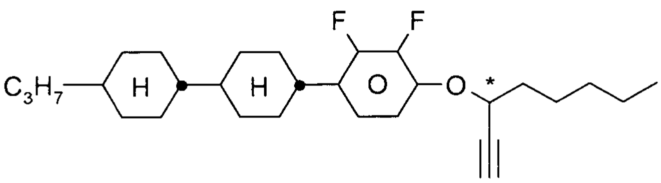

**R-3011 / S-3011**

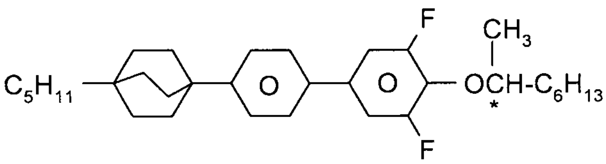

**R-4011 / S-4011**

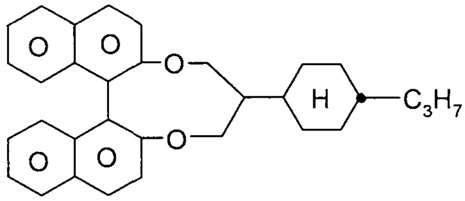

**R-5011 / S-5011**

In einer bevorzugten Ausführungsform der vorliegenden Erfindung enthalten die erfindungsgemäßen Medien eine oder mehrere Verbindungen, ausgewählt aus der Gruppe der Verbindungen der Tabelle E.

In der Tabelle F werden Stabilisatoren genannt, die bevorzugt zusätzlich zu den Verbindungen der Formel I in den erfindungsgemäßen Mischungen eingesetzt werden können. Der Parameter n bedeutet hier eine ganze Zahl im Bereich von 1 bis 12. Insbesondere die gezeigten Phenolderivate sind als zusätzliche Stabilisatoren einsetzbar, da sie als Antioxidantien wirken.

**<u>Tabelle F</u>**

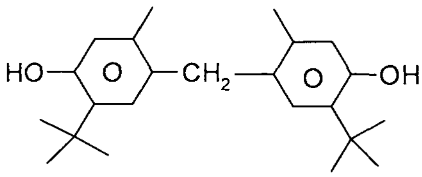

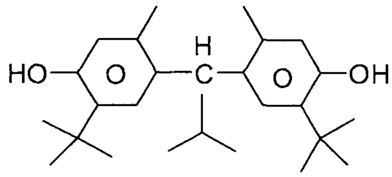

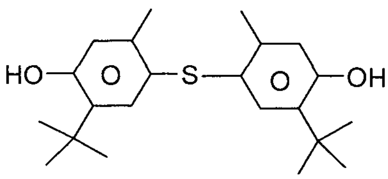

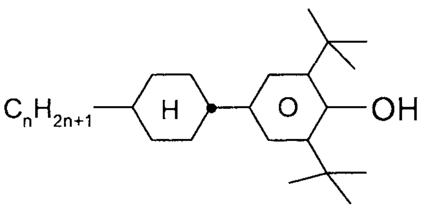

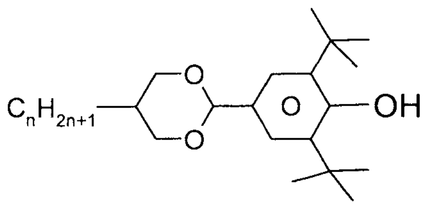

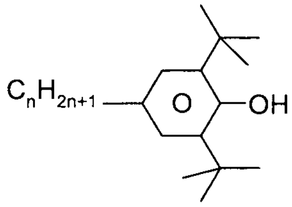

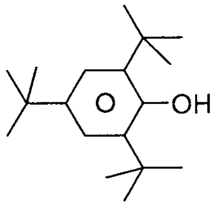

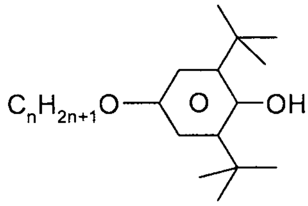

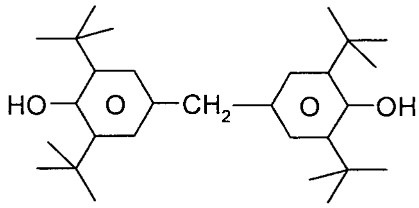

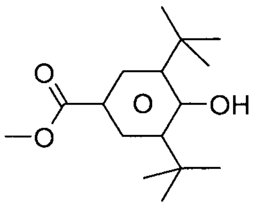

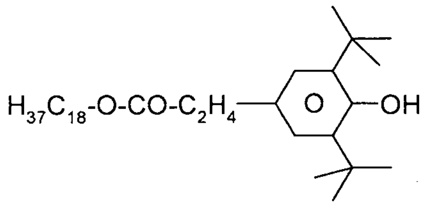

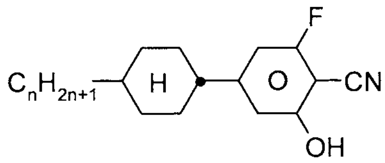

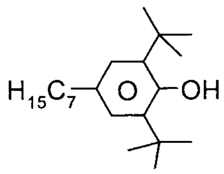

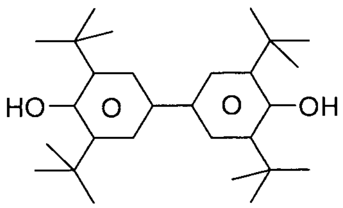

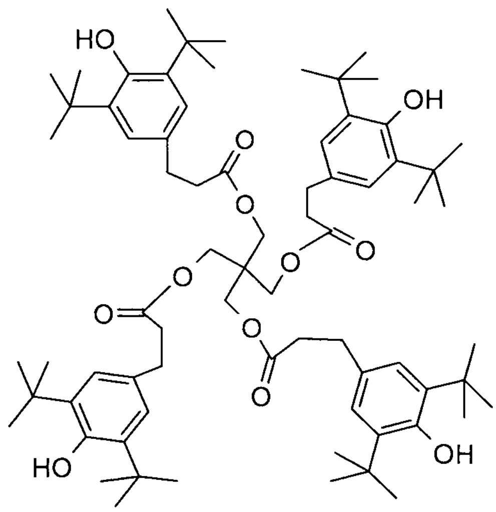

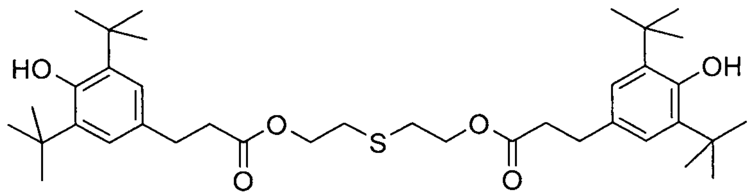

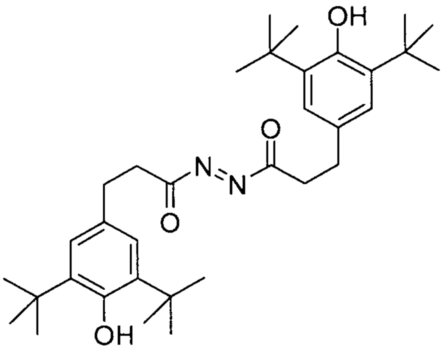

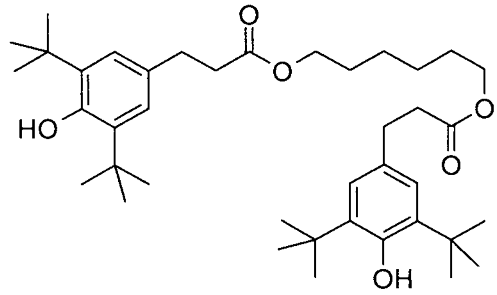

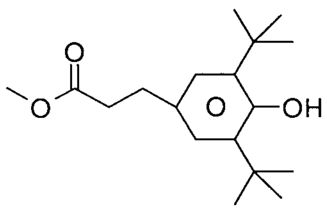

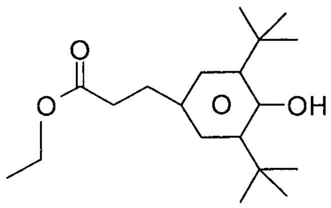

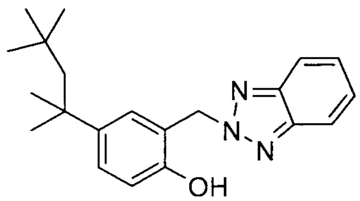

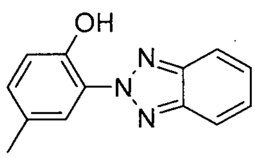

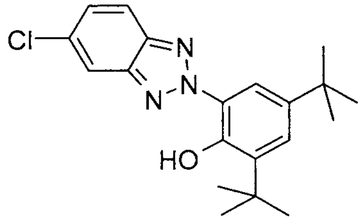

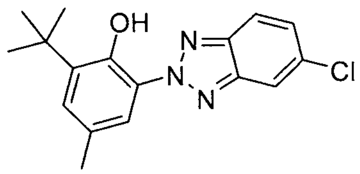

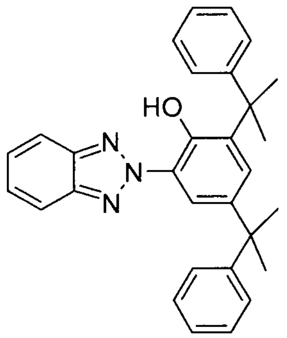

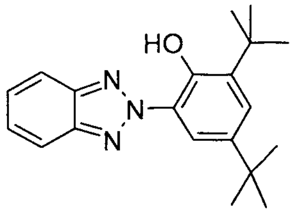

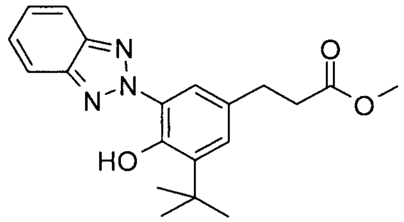

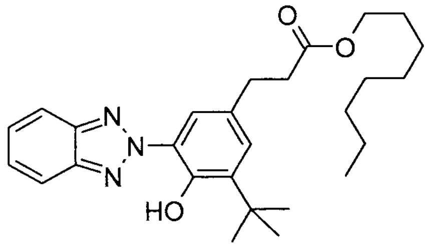

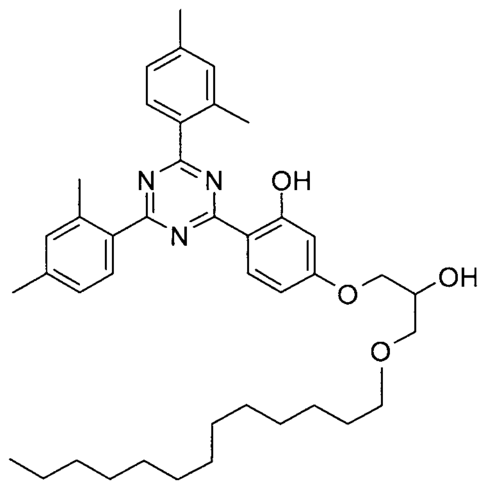

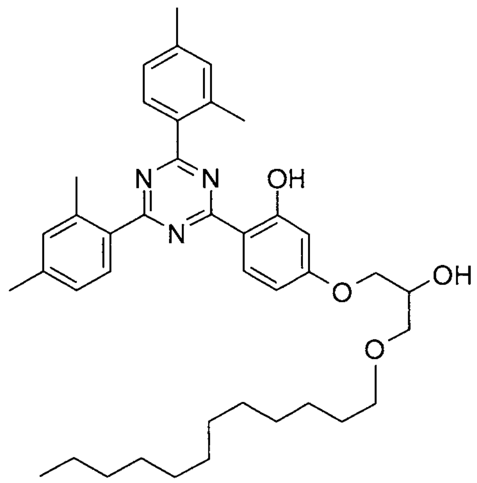

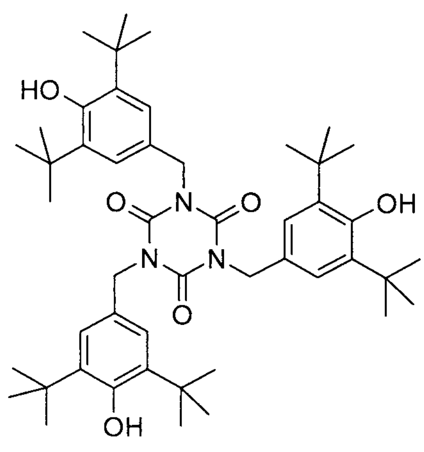

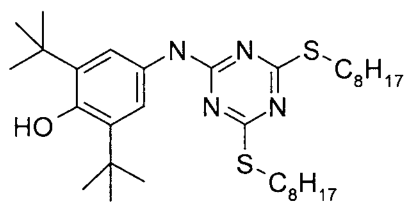

In einer bevorzugten Ausführungsform der vorliegenden Erfindung enthalten die erfindungsgemäßen Medien eine oder mehrere Verbindungen, ausgewählt aus der Gruppe der Verbindungen der Tabelle F, insbesondere mehrere Verbindungen ausgewählt aus der Gruppe der Verbindungen der beiden Formeln

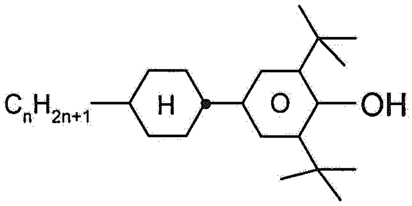 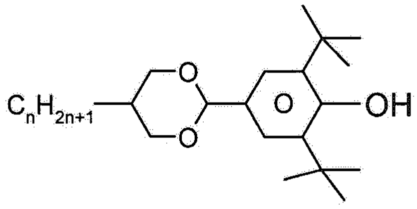

Beispiele

Die folgenden Beispiele erläutern die vorliegende Erfindung, ohne sie in irgendeiner Weise zu beschränken. Aus den physikalischen Eigenschaften wird dem Fachmann jedoch deutlich, welche Eigenschaften zu erzielen sind und in welchen Bereichen sie modifizierbar sind. Insbesondere ist also die Kombination der verschiedenen Eigenschaften, die vorzugsweise erreicht werden können, für den Fachmann gut definiert.

Vergleichsbeispiel 1

Die folgende Mischung (M-1) wird hergestellt und untersucht.

| Mischung M-1 | | | | | | |
|---|---|---|---|---|---|---|
| Zusammensetzung | | | Physikalische Eigenschaften | | | |
| Verbindung | | Konzentration | T(N, I) | = | 75,7 | °C |
| No. | Abkürzung | /Massen-% | | | | |
| 1 | CY-3-O2 | 19,0 | Δn(20°C, 589 nm) | = | 0,0962 | |
| 2 | CY-5-O2 | 5,0 | | | | |
| 3 | CCY-3-O2 | 8,0 | Δε(20°, 1 kHz) | = | -3,1 | |
| 4 | CLY-2-O4 | 4,0 | | | | |
| 5 | CLY-3-O2 | 4,0 | $\gamma_1$(20°C) | = | 87 | mPa·s |
| 6 | CLY-3-O3 | 4,0 | | | | |
| 7 | CPY-2-O2 | 8,0 | $k_{33}$(20°C) | = | 12,9 | pN |
| 8 | CPY-3-O2 | 8,0 | $k_{33}$(20°C) | = | 15,2 | pN |
| 9 | CC-3-V | 20,0 | | | | |
| 10 | CC-3-V1 | 5,0 | Vo(20°C) | = | 2,33 | V |
| 11 | CCP-V-1 | 12,0 | | | | |
| Σ | | 100,0 | | | | |

250 ppm der Verbindung TINUVIN®770 werden der Mischung M-1 zugesetzt. Die resultierende Mischung (M-1-1) wird, ebenso wie die Mischung M-1 selbst, in einer Testzelle mit einem Orientierungsmaterial für homeotrope Ausrichtung und flächigen ITO-Elektorden auf ihre Stabilität gegen die Beleuchtung mit einer Kaltkathoden (CCFL)-LCD-Hintergrundbeleuchtung untersucht. Dazu werden die Testzellen 1.000 Stunden der Beleuchtung ausgesetzt. Danach wird die Voltage Holding Ratio nach 5 Minuten bei einer Temperatur von 100°C bestimmt.

Die Reproduzierbarkeit der "Voltage Holding Ratio"-Werte bei verschiedenen Messserien, liegt im Bereich von ca. 3 bis 4 %.

Die üblicherweise, durch die Belastung verursachte Abnahme der Voltage Holding Ratio (ΔVHR) wird nach der folgenden Gleichung (1) bestimmt:

$$\Delta VHR(t) = VHR(t) - VHR(t=0) \qquad (1).$$

Bestimmt man die relative Stabilität ($S_{rel}$) einer LC Mischung gegenüber LCD-Hintergrundbeleuchtung nach einer Zeit t gemäß der folgenden Gleichung, Gleichung (2):

$$S_{rel}(t) = \frac{VHRref(t=0) - VHRref(t)}{VHR(t=0) - VHR(t)} \qquad (2),$$

wobei "ref" für die entsprechende unstabilisierte Mischung (hier M-1) steht, so erhält man für dieses Beispiel eine relative Stabilisierung von $S_{rel}$ (1.000 h) = 2,0. Dieses Ergebnis entspricht einer effektiven Verdoppelung der Stabilität für die untersuchte Mischung durch die Verwendung von 250 ppm TINUVIN®770.

Setzt man TINUVIN®770 in einer Konzentration von 100 ppm, 200 ppm bzw. 300 ppm in der Mischungsbereich anzugeben. Der liegt zwischen 100 und 300 ppm in der Mischung (M-1) ein (resultierende Mischungen M-1-2, M-1-3 und M-1-4) erhält man ähnlich gute Resultate wie die oben beschriebenen.

Vergleichsbeispiel 2:

Die folgende Mischung (M-2) wird hergestellt und untersucht.

| Mischung M-2 | | | | | | |
|---|---|---|---|---|---|---|
| Zusammensetzung | | | Physikalische Eigenschaften | | | |
| Verbindung | | Konzentration | T(N, I) | = | 79,6 | °C |
| No. | Abkürzung | /Massen-% | | | | |
| 1 | CY-3-O2 | 15,0 | Δn(20°C, 589 nm) | = | 0,0945 | |
| 2 | CY-5-O2 | 5,0 | | | | |
| 3 | CCY-3-O2 | 8,0 | Δε(20°, 1 kHz) | = | -3,2 | |
| 4 | CLY-3-02 | 9,0 | | | | |
| 5 | CPY-2-O2 | 8,0 | $\gamma_1$(20°C) | = | 99 | mPa·s |
| 6 | CPY-3-02 | 8,0 | | | | |
| 7 | PYP-2-3 | 4,5 | $k_{11}$(20°C) | = | 13,6 | pN |
| 8 | CC-3-V | 40,5 | $k_{33}$(20°C) | = | 16,0 | pN |
| 9 | CCP-V-1 | 2.0 | | | | |
| Σ | | 100,0 | $V_0$(20°C) | = | 2,36 | V |

Die Mischung M-2 wird wie bei Beispiel 1 beschrieben untersucht. Dazu werden auch dieser Mischung 250 ppm der Verbindung TINUVIN®770 zugesetzt. Die resultierende Mischung (M-2-1) wird, ebenso wie die Mischung M-2 selbst, in einer Testzelle auf ihre Stabilität gegen die Beleuchtung mit einer LCD-Hintergrundbeleuchtung untersucht. Dazu werden die Testzellen 1.000 Stunden der Beleuchtung ausgesetzt. Danach wird die Voltage Holding Ratio nach 5 Minuten bei einer Temperatur von 100°C bestimmt. Die relative Verbesserung der voltage holding ratio beträgt hier $S_{rel}$(1.000 h) = 1,5.

Vergleichsbeispiele 3, 3a und 3b:

Vergleichsbeispiel 3:

Die folgende Mischung (C-3) wird hergestellt und untersucht.

| Mischung C-3 | | | | | | |
|---|---|---|---|---|---|---|
| Zusammensetzung | | | Physikalische Eigenschaften | | | |
| Verbindung | | Konzentration | T(N, I) | = | 80,6 | °C |
| No. | Abkürzung | /Massen-% | | | | |
| 1 | CY-3-O2 | 18,0 | Δn(20°C, 589 nm) | = | 0,0948 | |
| 2 | CY-5-O2 | 10,0 | | | | |
| 3 | CCY-3-O2 | 7,0 | Δε(20°, 1 kHz) | = | -3,1 | |
| 4 | CLY-3-O2 | 8,0 | | | | |

(fortgesetzt)

| Mischung C-3 | | | | | | | |
|---|---|---|---|---|---|---|---|
| Zusammensetzung | | | Physikalische Eigenschaften | | | |
| 5 | CPY-2-O2 | 9,0 | $\gamma_1$(20°C) | = | 122 | mPa·s |
| 6 | PYP-2-3 | 5,0 | | | | |
| 7 | CC-2-3 | 22,0 | $k_{11}$(20°C) | = | 14,8 | pN |
| 8 | CC-3-4 | 4,0 | $k_{33}$(20°C) | = | 16,0 | pN |
| 9 | CCP-3-3 | 17,5 | | | | |
| $\Sigma$ | | 100,0 | $V_0$(20°C) | = | 2,37 | V |

Diese Vergleichsmischung C-3 wird wie in Beispiel 1 beschrieben untersucht Die Ergebnisse sind in der folgenden Tabelle, Tabelle 1, angegeben.

| Tabelle 1 | | | | |
|---|---|---|---|---|
| Bsp. Nr. | Mischung Nr. | $\gamma_1$ (20°C) / mPa·s | Konz. (T) /ppm | $\Delta$VHR(1.000 h) / % |
| V3a | C-3 | 122 | 0 | -5 |
| V3b | M-3 | 93 | 0 | -15 |
| V3c | M-3-1 | 93 | 250 | -4 |

Vergleichsbeispiel 3c:

Die folgende Mischung (M-3) wird hergestellt und untersucht.

| Mischung M-3 | | | | | | |
|---|---|---|---|---|---|---|
| Zusammensetzung | | | Physikalische Eigenschaften | | | |
| Verbindung | | Konzentration | T(N, I) | = | 75,4 | °C |
| No. | Abkürzung | /Massen-% | | | | |
| 1 | CY-3-O2 | 15,0 | $\Delta$n(20°C, 589 nm) | = | 0,1077 | |
| 2 | CY-5-O2 | 6,0 | | | | |
| 3 | CCY-3-O2 | 3,0 | $\Delta\varepsilon$(20°, 1 kHz) | = | -3,0 | |
| 4 | CLY-3-O2 | 8,0 | | | | |
| 5 | CPY-2-O2 | 8,0 | $\gamma_1$ (20°C) | = | 93 | mPa·s |
| 6 | CPY-3-O2 | 8,0 | | | | |
| 7 | PYP-2-3 | 11,5 | $k_{11}$(20°C) | = | 12,9 | pN |
| 8 | CC-3-V | 35,0 | $k_{33}$(20°C) | = | 14,8 | pN |
| 9 | CCP-V-1 | 5,5 | | | | |
| $\Sigma$ | | 100,0 | $V_0$(20°C) | = | 2,35 | V |

Die Wirtsmischung M-3 wird wie in Beispiel 1 beschrieben untersucht und wie die Mischung M-1 mit 250 ppm der Verbindung TINUVIN®770 versetzt. Die resultierende Mischung (M-3-1) wird ebenfalls untersucht.

Die relative Verbesserung der Voltage Holding Ratio beträgt hier $S_{rel}$(1.000 h) = 2,9. Die Ergebnisse sind in der obigen Tabelle, Tabelle 1, zusammen gefasst.

Im direkten Vergleich der Eigenschaften der Mischungen C-3 und M-3 ist offensichtlich, dass bei der Mischung M-3 die Rotationsviskosität, die für die Schaltzeit bedeutend ist, signifikant niedriger ist als bei der entsprechenden Vergleichsmischung C-3 (siehe Tabelle 1). Der Nachteil der bei der Mischung M-3 gegenüber der Vergleichsmischung C-3 deutlich verringerten VHR tritt bei der stabilisierten Mischung gemäß der vorliegenden Anmeldung (M-3-1) nicht mehr auf.

Vergleichsbeispiele 4, 4a und 4b:

Vergleichsbeispiel 4a:

Die folgende Mischung (C-4) wird hergestellt und untersucht.

| Mischung C-4 | | | | | | |
|---|---|---|---|---|---|---|
| Zusammensetzung | | | Physikalische Eigenschaften | | | |
| Verbindung | | Konzentration | T(N, I) | = | 77,5 | °C |
| No. | Abkürzung | /Massen-% | | | | |
| 1 | Y-3-O2 | 15,0 | Δn(20°C, 589 nm) | = | 0,1018 | |
| 2 | CCY-3-O2 | 8,5 | | | | |
| 3 | CCY-4-O2 | 10,0 | Δε(20°, 1 kHz) | = | -3,0 | |
| 4 | CPY-2-O2 | 5,0 | | | | |
| 5 | CPY-3-O2 | 10,0 | $\gamma_1$(20° C) | = | 112 | mPa·s |
| 6 | PYP-2-3 | 11,5 | | | | |
| 7 | CC-2-3 | 22,0 | $k_{11}$(20°C) | = | 13,0 | pN |
| 8 | CC-3-4 | 10,0 | $k_{33}$(20°C) | = | 13,3 | pN |
| 9 | CP-3-O1 | 8,0 | | | | |
| Σ | | 100,0 | $V_0$(20°C) | = | 2,37 | V |

Diese Vergleichsmischung C-4 wird wie in Beispiel 1 beschrieben untersucht Die Ergebnisse sind in der folgenden Tabelle, Tabelle 2, angegeben.

| Tabelle 2 | | | | |
|---|---|---|---|---|
| Bsp. Nr. | Mischung Nr. | $\gamma_1$(20°C) / mPa·s | Konz. (T) /ppm | ΔVHR(1.000 h) / % |
| V4a | C-4 | 112 | 0 | -18 |
| V4b | M-4 | 117 | 0 | -35 |
| V4c | M-4-1 | 117 | 250 | -19 |

Vergleichsbeispiel 4c:

Die folgende Mischung (M-4) wird hergestellt und untersucht.

| Mischung M-4 | | | | | | |
|---|---|---|---|---|---|---|
| Zusammensetzung | | | Physikalische Eigenschaften | | | |
| Verbindung | | Konzentration | T(N, I) | = | 80 | °C |
| No. | Abkürzung | /Massen-% | | | | |
| 1 | CY-3-O4 | 20,0 | Δn(20°C, 589 nm) | = | 0,0913 | |
| 2 | CCY-3-O2 | 13,0 | | | | |
| 3 | CCY-4-O2 | 5,0 | Δε(20°, 1 kHz) | = | -3,4 | |
| 4 | CPY-2-O2 | 10,0 | | | | |
| 5 | CPY-3-O2 | 10,0 | $\gamma_1$(20°C) | = | 117 | mPa·s |
| 6 | CC-3-4 | 9,0 | | | | |
| 7 | CC-3-5 | 4,0 | $k_{11}$(20°C) | = | 13,6 | pN |
| 8 | CC-3-O1 | 9,0 | $k_{33}$(20°C) | = | 14,8 | pN |
| 9 | CC-3-V | 12,0 | | | | |

(fortgesetzt)

| Mischung M-4 | | | | | | |
|---|---|---|---|---|---|---|
| Zusammensetzung | | | Physikalische Eigenschaften | | | |
| 10 | CP-3-O1 | 5,0 | $V_0$(20°C) | = | 2,19 | V |
| 11 | CCP-V-1 | 12,0 | | | | |
| Σ | | 100,0 | | | | |

Die Wirtsmischung M-4 wird, wie in Beispiel 1 beschrieben untersucht und wie die Mischung M-1 mit 250 ppm der TINUVIN®770 versetzt zur Mischung M-4-1. Die Ergebnisse sind in der vorhergehenden Tabelle, Tabelle 2, zusammen gefasst.

Vergleichsbeispiele 5.0 5:

Die folgende Mischung (M-5) wird hergestellt und untersucht.

| Mischung M-5 | | | | | | |
|---|---|---|---|---|---|---|
| Zusammensetzung | | | Physikalische Eigenschaften | | | |
| Verbindung | | Konzentration | T(N, I) | = | 75,3 | °C |
| No. | Abkürzung | /Massen-% | | | | |
| 1 | Y-3-O4 | 15,0 | Δn(20°C, 589 nm) | = | 0,1075 | |
| 2 | CCY-4-O2 | 9,5 | | | | |
| 3 | CCY-5-O2 | 5,0 | Δε(20°, 1 kHz) | = | -3,0 | |
| 4 | CPY-2-O2 | 9,0 | | | | |
| 5 | CPY-3-O2 | 9,0 | $\gamma_1$(20°C) | = | 116 | mPa·s |
| 6 | PYP-2-3 | 7,0 | | | | |
| 7 | PYP-2-4 | 7,5 | $k_{11}$(20°C) | = | 12,9 | pN |
| 8 | CC-2-3 | 22,0 | $k_{33}$(20°C) | = | 13,1 | pN |
| 9 | CC-3-4 | 9,0 | | | | |
| 10 | CP-3-O1 | 7,0 | $V_0$(20°C) | = | 2,20 | V |
| Σ | | 100,0 | | | | |

Die Wirtsmischung M-5 wird oben beschrieben untersucht (Vergleichsbeispiel 5). Dann wird ihr 250 ppm TINUVIN®770 zugegeben und die neue Mischung (M-5-1) ebenfalls untersucht.

Vergleichsbeispiel 6:

Die folgende Mischung (M-6) wird hergestellt und untersucht.

| Mischung M-6 | | | | | | |
|---|---|---|---|---|---|---|
| Zusammensetzung | | | Physikalische Eigenschaften | | | |
| Verbindung | | Konzentration | T(N, I) | = | 73,9 | °C |
| No. | Abkürzung | /Massen-% | | | | |
| 1 | CY-3-O2 | 15,0 | Δn(20°C, 589 nm) | = | 0,1072 | |
| 2 | CY-3-O4 | 3,0 | | | | |
| 3 | CCY-3-O2 | 6,0 | Δε(20°, 1 kHz) | = | -3,0 | |
| 4 | CCY-3-O3 | 3,5 | | | | |
| 5 | CCY-4-O2 | 5,0 | $\gamma_1$(20°C) | = | 93 | mPa·s |
| 6 | CPY-2-O2 | 8,0 | | | | |

(fortgesetzt)

| Mischung M-6 | | | | | | |
|---|---|---|---|---|---|---|
| Zusammensetzung | | | Physikalische Eigenschaften | | | |
| 7 | CPY-3-O2 | 8,0 | $k_{11}$(20°C) | = | 12,2 | pN |
| 8 | PYP-2-3 | 8,0 | $k_{33}$(20°C) | = | 13,9 | pN |
| 9 | PYP-2-4 | 6,5 | | | | |
| 10 | CC-3-V | 37,0 | $V_0$(20°C) | = | 2,26 | V |
| Σ | | 100,0 | | | | |

Anschließend wird die Wirtsmischung M-6 mit 250 ppm TINUVIN®770 versetzt und wie oben beschrieben bezüglich der Stabilität der Holding Ratio untersucht. Insgesamt werden Testzellen mit zwei verschiedenen Polyimid-Orientierungsschichten verwendet. Die Ergebnisse sind vergleichbar mit denen der vorhergehenden Beispiele.

Vergleichsbeispiel 7:

Die folgende Mischung (M-7) wird hergestellt und untersucht.

| Mischung M-7 | | | | | | |
|---|---|---|---|---|---|---|
| Zusammensetzung | | | Physikalische Eigenschaften | | | |
| Verbindung | | Konzentration | T(N, I) | = | 75 | °C |
| No. | Abkürzung | /Massen-% | | | | |
| 1 | CY-3-O2 | 15,0 | Δn(20°C, 589 nm) | = | 0,0952 | |
| 2 | CY-5-O2 | 6,0 | | | | |
| 3 | CCY-3-O2 | 4,0 | Δε(20°, 1 kHz) | = | -2,9 | |
| 4 | CCY-3-O3 | 4,0 | | | | |
| 5 | CCY-4-O2 | 3,0 | $\gamma_1$(20°C) | = | 88 | mPa·s |
| 6 | CLY-3-O2 | 5,0 | | | | |
| 7 | CPY-2-O2 | 7,0 | $k_{11}$(20°C) | = | 12,9 | pN |
| 8 | CPY-3-O2 | 7,0 | $k_{33}$(20°C) | = | 14,9 | pN |
| 9 | PYP-2-3 | 5,5 | | | | |
| 10 | CC-3-V | 30,0 | $V_0$(20°C) | = | 2,37 | V |
| 11 | CC-3-V1 | 6,0 | | | | |
| 12 | CC-4-V | 4,5 | | | | |
| 13 | CCP-V-1 | 3,0 | | | | |
| Σ | | 100,0 | | | | |

Anschließend wird die Wirtsmischung M-7 mit 250 ppm TINUVIN®770 versetzt und wie oben beschrieben bezüglich der Stabilität der Holding Ratio untersucht. Die Ergebnisse sind vergleichbar mit denen der vorhergehenden Beispiele.

Vergleichsbeispiel 8:

Die folgende Mischung (M-8) wird hergestellt und untersucht.

| Mischung M-8 | | | | | | |
|---|---|---|---|---|---|---|
| Zusammensetzung | | | Physikalische Eigenschaften | | | |
| Verbindung | | Konzentration | T(N, I) | = | 75,7 | °C |
| No. | Abkürzung | /Massen-% | | | | |
| 1 | CY-3-O2 | 15,0 | Δn(20°C, 589 nm) | = | 0,0951 | |

(fortgesetzt)

| Mischung M-8 | | | | | | |
|---|---|---|---|---|---|---|
| Zusammensetzung | | | Physikalische Eigenschaften | | | |
| 2 | CY-5-O2 | 3,0 | | | | |
| 3 | CCY-3-O2 | 5,0 | $\Delta\varepsilon$(20°, 1 kHz) | = | -2,8 | |
| 4 | CCY-3-O3 | 5,0 | | | | |
| 5 | CCY-4-O2 | 3,0 | $\gamma_1$(20°C) | = | 86 | mPa·s |
| 6 | CLY-3-O2 | 5,0 | | | | |
| 7 | CPY-2-O2 | 7,0 | $k_{11}$(20°C) | = | 13,4 | pN |
| 8 | CPY-3-O2 | 7,0 | $k_{33}$(20°C) | = | 14,7 | pN |
| 9 | PYP-2-3 | 6,5 | | | | |
| 10 | CC-3-V | 30,0 | $V_0$(20°C) | = | 2,38 | V |
| 11 | CC-3-V1 | 6,0 | | | | |
| 12 | CC-4-V | 7.5 | | | | |
| Σ | | 100,0 | | | | |

Anschließend wird die Wirtsmischung M-8 mit 250 ppm TINUVIN®770 versetzt und wie oben beschrieben bezüglich der Stabilität der Holding Ratio untersucht. Die Ergebnisse sind vergleichbar mit denen der vorhergehenden Beispiele.

Vergleichsbeispiel 9:

Die folgende Mischung (M-9) wird hergestellt und untersucht.

| Mischung M-9 | | | | | | |
|---|---|---|---|---|---|---|
| Zusammensetzung | | | Physikalische Eigenschaften | | | |
| Verbindung | | Konzentration | T(N, I) | = | 75,1 | °C |
| No. | Abkürzung | /Massen-% | | | | |
| 1 | Y-3-O2 | 15,0 | $\Delta n$(20°C, 589 nm) | = | 0,1081 | |
| 2 | CY-5-O2 | 5,5 | | | | |
| 3 | CCY-3-O2 | 3,5 | $\Delta\varepsilon$(20°, 1 kHz) | = | -2,8 | |
| 4 | CLY-3-O2 | 4,0 | | | | |
| 5 | CLY-3-O3 | 4,0 | $\gamma_1$(20°C) | = | 91 | mPa·s |
| 6 | CPY-2-O2 | 7,0 | | | | |
| 7 | CPY-3-O2 | 7,0 | $k_{11}$(20°C) | = | 12,9 | pN |
| 8 | PYP-2-3 | 7,0 | $k_{33}$(20°C) | = | 14,3 | pN |
| 9 | PYP-2-4 | 5,0 | | | | |
| 10 | CC-3-V | 35,0 | $V_0$(20°C) | = | 2,37 | V |
| 11 | CC-3-V1 | 4,0 | | | | |
| 12 | CPP-3-2 | 3,0 | | | | |
| Σ | | 100,0 | | | | |

Anschließend wird die Wirtsmischung M-9 mit 250 ppm TINUVIN®770 versetzt und wie oben beschrieben bezüglich der Stabilität der Holding Ratio untersucht. Die Ergebnisse sind vergleichbar mit denen der vorhergehenden Beispiele.

Vergleichsbeispiele 10 und 10.1 bis 10.9:

Vergleichsbeispiel 10:

Die folgende Mischung (M-10) wird hergestellt und untersucht.

| Mischung M-10 | | | | | | |
|---|---|---|---|---|---|---|
| Zusammensetzung | | | Physikalische Eigenschaften | | | |
| Verbindung | | Konzentration | TN, I) | = | 68 | °C |
| No. | Abkürzung | /Massen-% | | | | |
| 1 | CY-3-O4 | 9,6 | Δn(20°C, 589 nm) | = | 0,0757 | |
| 2 | CY-5-O4 | 9,6 | | | | |
| 3 | CCY-2-O2 | 9,6 | Δε(20°, 1 kHz) | = | -2,8 | |
| 4 | CCY-3-O2 | 9,6 | | | | |
| 5 | CCY-5-O2 | 6,4 | $\gamma_1$(20°C) | = | n.b. | mPa·s |
| 6 | CCY-2-1 | 9,6 | | | | |
| 7 | CPY-3-1 | 6,4 | $k_{11}$(20°C) | = | 12,4 | pN |
| 8 | CC-3-4 | 6,4 | $k_{33}$(20°C) | = | 13,3 | pN |
| 9 | CC-3-V | 20,0 | | | | |
| 10 | CP-5-3 | 12,8 | Vo(20°C) | = | 2,31 | V |
| Σ | | 100,0 | | | | |
| Bemerkung: n.b.: nicht bestimmt. | | | | | | |

Diese Mischung M-10 selbst hat einen Ausgangswert der VHR, VHRo, von 99,4 % (vor Bestrahlung mit der LCD Hintergrundbeleuchtung. Sie wird mit 250 ppm TINUVIN® versetzt und untersucht. Die relative Verbesserung der Voltage Holding Ratio beträgt hier $S_{rel}$(1.000 h) = 2,8.

Vergleichsbeispiele 10.1 bis 10.5:

Alternativ werden entsprechenden weiteren Proben der Mischung M-10 jeweils 250 ppm jeweils einer der folgenden Substanzen

| | |
|---|---|
| 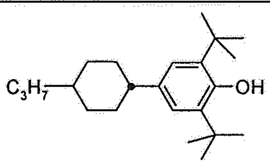 | OH-1 |
| 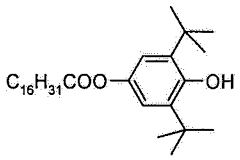 | OH-2 |
| 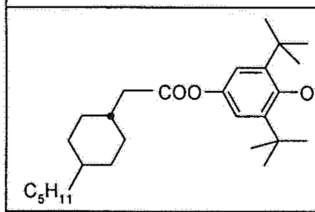 | OH-3 |
| 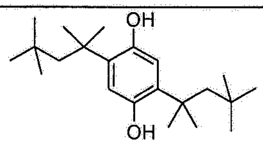 | OH-4 |
| 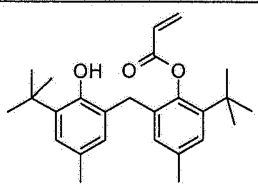 | OH-5 |

zugesetzt und die resultierenden Mischungen (CM-10-1 bis CM-10-5) untersucht. Die Ergebnisse sind in der folgenden Tabelle, Tabelle 3, angegeben.

Wie aus den Ergebnissen dieser Vergleichsuntersuchungen ersichtlich ist, sind bei den Verbindungen OH-1 bis OH-5 zwar Anfangswerte der Voltage Holding Ration gut, jedoch führen alle diese Verbindungen hier zu nahezu gar keiner relativen Stabilisierung. Im Vergleich dazu führt TINUVIN®770 hierzu einer relative Stabilisierung von 2,8.

Tabelle 3

| Bsp. Nr. | Mischung Nr. | Verbindung Nr. | Konz. (Verb.) /ppm | $VHR_0$ / % | $S_{rel}$(1.000 h) / % |
|---|---|---|---|---|---|
| V10a | M-10 | keine | 0 | 99,4 | 1,0* |
| V10b | CM-10-1 | OH-1 | 250 | 99,4 | 1,2 |
| V10c | CM-10-2 | OH-2 | 250 | 99,3 | 1,1 |
| V10d | CM-10-3 | OH-3 | 250 | 99,4 | 1,0 |
| V10e | CM-10-4 | OH-4 | 250 | 99,0 | 1,1 |
| V10b | CM-10-5 | OH-5 | 250 | 99,3 | 1,2 |
| V10 | M-10-1 | T | 250 | 99,2 | 2,8 |
| Bemerkungen: *): n.a.: nicht anwendbar und T: TINUVIN®770. | | | | | |

Vergleichsbeispiele 10.6 bis 10.9

Alternativ werden entsprechenden weiteren Proben der Mischung M-10 jeweils 250 ppm jeweils einer der folgenden Substanzen

| | |
|---|---|
| 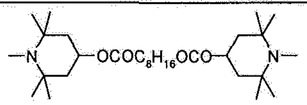 | N-1 |
| 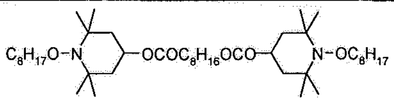 | N-2 |
| 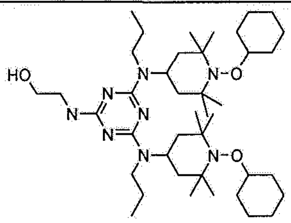 | N-3 |
| 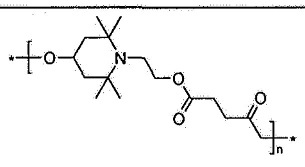 ($M_{average}$ = 3.100 - 4.000 g/mol) | N-4 |

zugesetzt und die resultierenden Mischungen (CM-10-6 bis CM-10-9) untersucht. Die Ergebnisse sind in der folgenden Tabelle, Tabelle 4, angegeben.

| Tabelle 4 | | | | | |
|---|---|---|---|---|---|
| Bsp. Nr. | Mischung Nr. | Verbindung Nr. | Konz. (Verb.) /ppm | $VHR_0$ / % | Srel(1.000 h) / % |
| V10f | M-10 | keine | 0 | 99,4 | 1,0* |
| V10g | CM-10-6 | N-1 | 250 | 70 | 5,5 |
| V10h | CM-10-7 | N-2 | 250 | 99,4 | 1,0 |
| V10i | CM-10-8 | N-3 | 250 | 73 | 1,6 |
| V10j | CM-10-9 | N-4 | 250 | 98,0 | 1,4 |
| V10 | M-10-1 | T | 250 | 99,2 | 2,8 |
| Bemerkungen: *): n.a.: nicht anwendbar und T: TINUVIN®770. | | | | | |

Wie aus den Ergebnissen dieser Vergleichsuntersuchungen ersichtlich ist, sind bei den Verbindungen N-1 und N-3 die Anfangswerte der Voltage Holding Ration unakzeptabel niedrig. Dadurch kann auch die Verbindung N-1, die zu einem sehr guten Wert für die relative Stabilisierung führt, hier praktisch nicht eingesetzt werden. N-3 führt allenfalls zu einer kleinen relativen Stabilisierung und hat ebenfalls einen sehr niedrigen Anfangswert. N-2 weist zwar einen guten Anfangwert auf, führt jedoch zu überhaupt keiner relativen Stabilisierung. Die polymere Verbindung N-4 führt auch zu einem deutlich geringern Anfangswert im Vergleich zur Ausgangsmischung und zu allenfalls einer sehr geringen relativen Stabilisierung.

Beispiel 11 und Beispiel 11:

Vergleichsbeispiel 11:

Die Mischung M-10 des Vergleichsbeispiels 10 wird mit 500 ppm der Verbindung TINUVIN®770 versetzt und 4 h in einer verschlossenen Glasflasche einer Temperatur von 150°C ausgesetzt. Anschließend wird die VHR bestimmt und mit dem Ausgangswert der Mischung mit 500 ppm TINUVIN®770 vor der Temperaturbelastung verglichen. Die VHR beträgt vor Belastung 99 % und nach Belastung 68 %.

Beispiel 11:

Dann wird zu der Mischung M-10 sowohl 500 ppm der Verbindung TINUVIN®770 als auch 200 ppm der Verbindung OH-1 zugesetzt. Auch diese Mischung wird 4 h einer Temperatur von 150°C ausgesetzt. Im Gegensatz zu der Mischung, die nur 500 ppm TINUVIN®770 aber kein OH-1 enthält, ist hier die Voltage Holding Ratio nach der Temperaturbelastung auf dem gleichen Niveau wie vor dem Temperaturbelastungstest. Die VHR beträgt vor Belastung 99 % und nach Belastung VHR 99 %

Beide Mischungen werden bezüglich ihrer Stabilität gegen die Bestrahlung mit einer LCD Hintergrundbeleuchtung untersucht. Die Ergebnisse sind für beide Mischungen gleich gut. Somit ist die Mischung des Beispiels 11 bezüglich des Verhaltens bei gemeinsamer Betrachtung des Verhaltens gegenüber Temperaturbelastung und gegenüber der Belastung durch die Hintergrundbeleuchtung der Mischung des Vergleichsbeispiels 11 überlegen.

## Patentansprüche

**1.** Flüssigkristallines Medium mit einer nematischen Phase und einer negativen dielektrischen Anisotropie, welches

a) eine Verbindung der Formel I

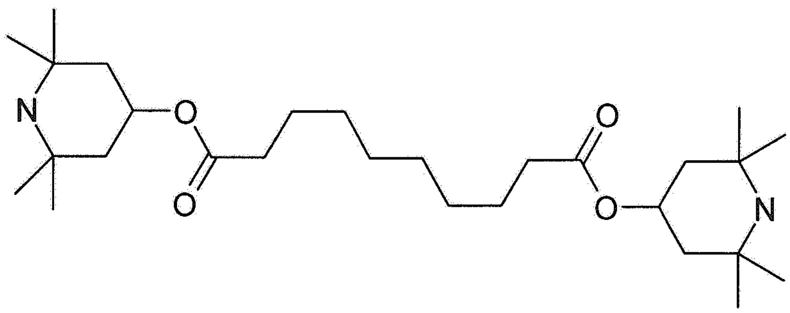

I

und ein oder mehrere Phenolderivate der Formel

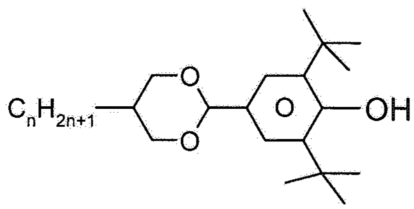

,

worin

n eine ganze Zahl im Bereich von 1 bis 12

bedeutet,

b) eine oder mehrere Verbindungen der Formel II

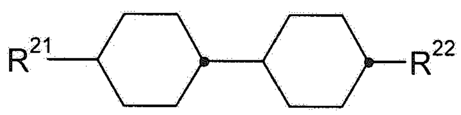

II

worin

$R^{21}$ einen unsubstituierten Alkylrest mit 1 bis 7 C-Atomen oder einen unsubstituierten Alkenylrest mit 2 bis 7 C-Atomen und

$R^{22}$ einen unsubstituierten Alkenylrest mit 2 bis 7 C-Atomen,

bedeuten, und

c) eine oder mehrere Verbindungen ausgewählt aus der Gruppe der Verbindungen der Formeln III-1 bis III-4

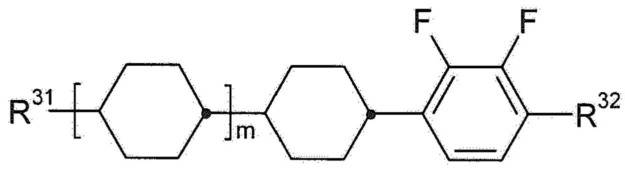

III-1

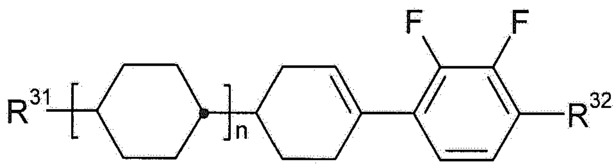

III-2

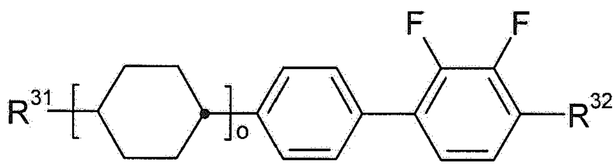

III-3

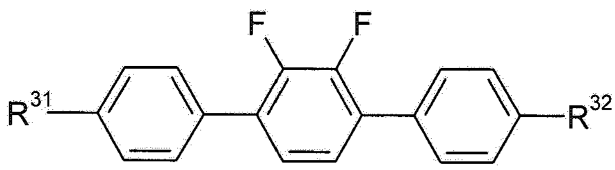

III-4

worin

$R^{31}$ einen unsubstituierten Alkylrest mit 1 bis 7 C-Atomen,
$R^{32}$ einen unsubstituierten Alkylrest mit 1 bis 7 C-Atomen, oder einen unsubstituierten Alkoxyrest mit 1 bis 6 C-Atomen, und
m, n und o jeweils unabhängig voneinander 0 oder 1

bedeuten,
enthält.

**2.** Medium nach Anspruch 1, **dadurch gekennzeichnet, dass** es zusätzlich eine oder mehrere Phenolderivate ausgewählt aus der Gruppe der Verbindungen der Formeln

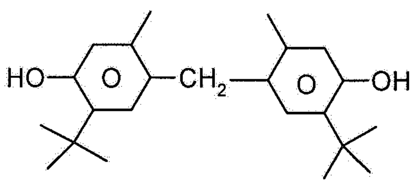

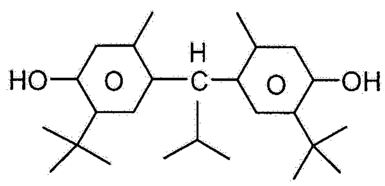

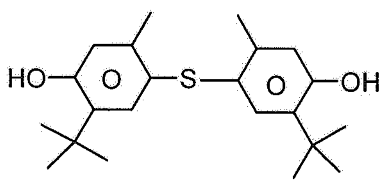

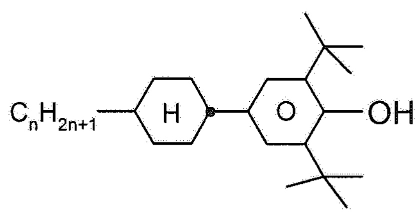

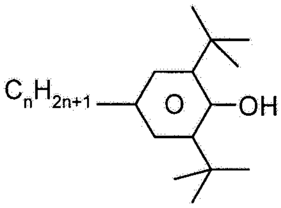

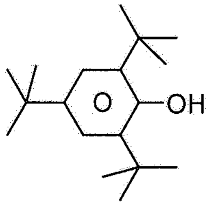

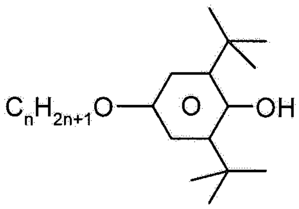

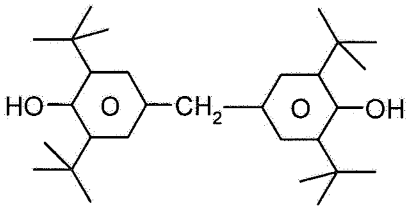

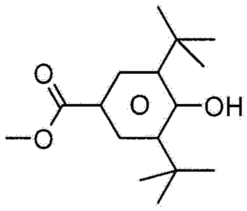

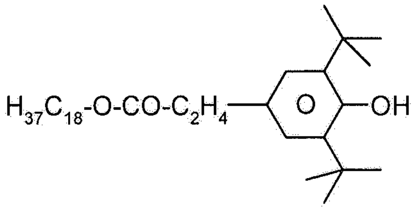

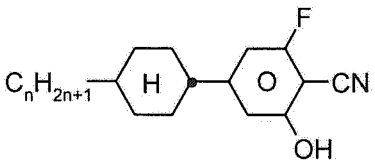

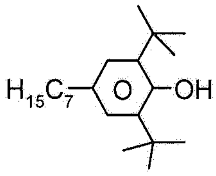

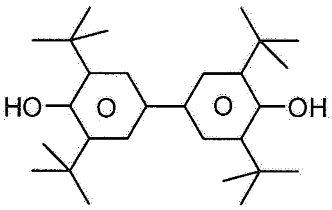

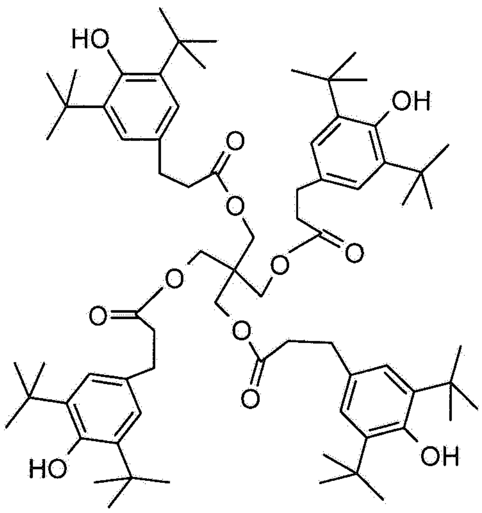

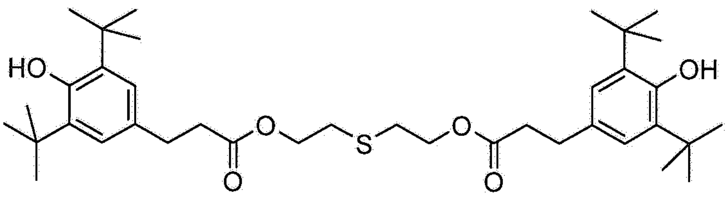

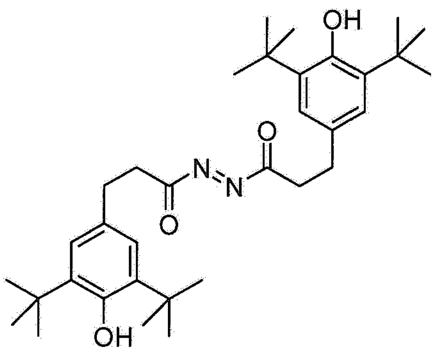

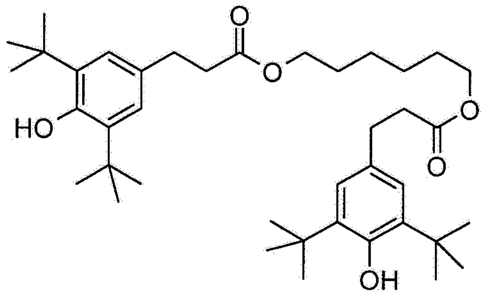

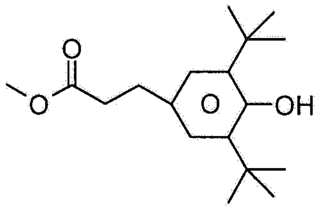

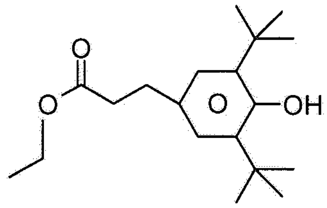

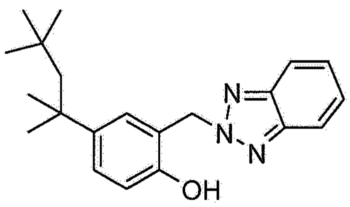

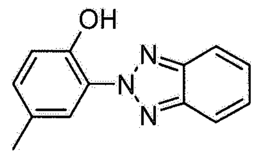

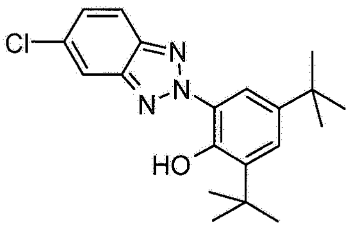

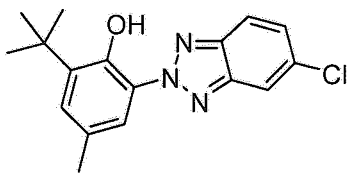

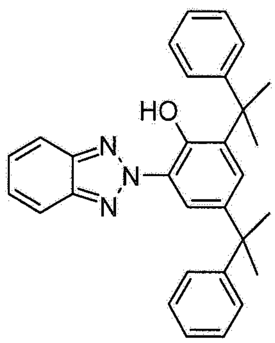

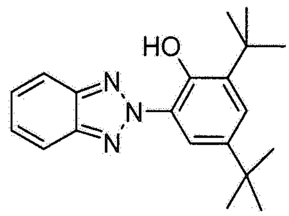

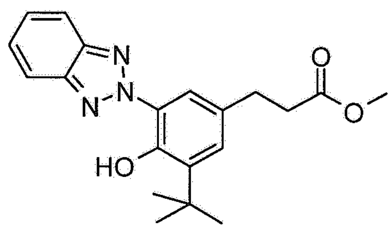

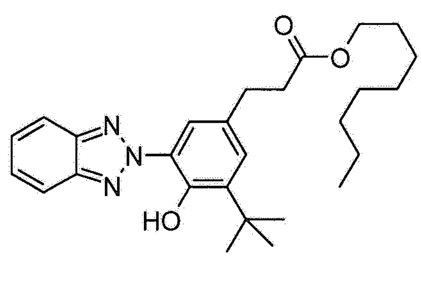

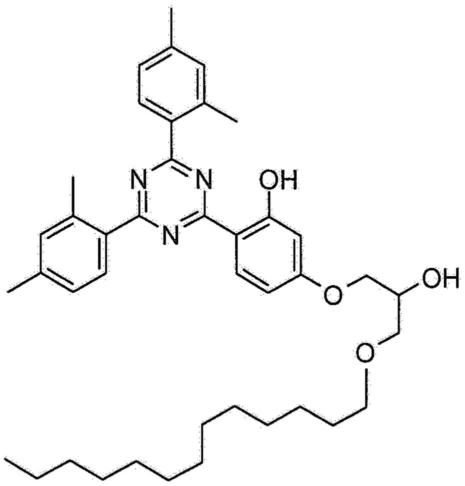

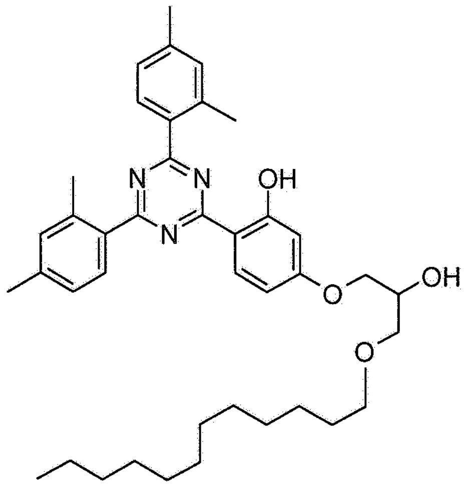

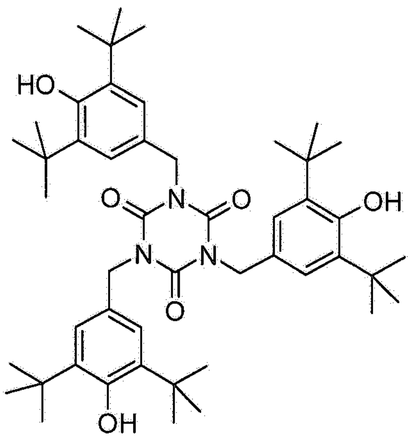

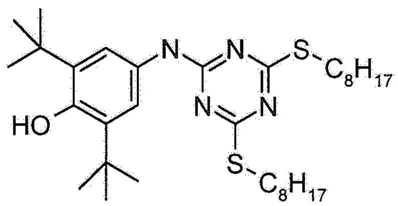

worin

n eine ganze Zahl im Bereich von 1 bis 12

bedeutet,
enthält.

**3.** Medium nach Anspruch 1 oder 2, **dadurch gekennzeichnet, dass** es eine Verbindung der Formel

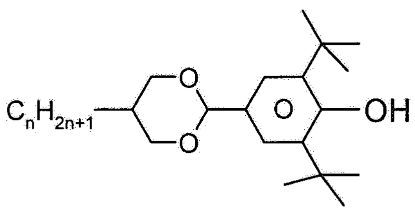

worin n 3 bedeutet, enthält.

**4.** Medium nach einem oder mehreren der Ansprüche 1 bis 3, **dadurch gekennzeichnet, dass** es eine oder mehrere Verbindungen der Formel II, wie in Anspruch 1 angegeben, worin $R^{22}$ Vinyl bedeutet, enthält.

**5.** Medium nach Anspruch 4, **dadurch gekennzeichnet, dass** die Gesamtkonzentration der Verbindungen der Formel II, wie in Anspruch 4 angegeben im Gesamtmedium 25 % oder mehr bis 45 % oder weniger beträgt.

**6.** Medium nach einem oder mehreren der Ansprüche 1 bis 4, **dadurch gekennzeichnet, dass** es eine oder mehrere

Verbindungen der

Formel III-2-2

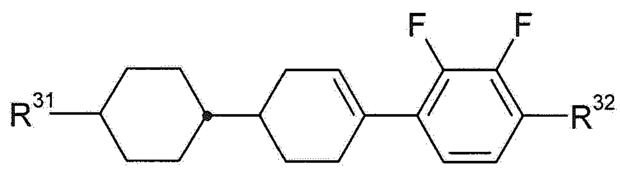

III-2-2

worin $R^{31}$ und $R^{32}$ die jeweiligen in Anspruch 1 bei Formel III-2 gegebenen Bedeutungen haben, enthält.

7. Medium nach einem oder mehreren der der Ansprüche 1 bis 6, **dadurch gekennzeichnet**, es eine oder mehrere Verbindungen der

Formel III-3-2

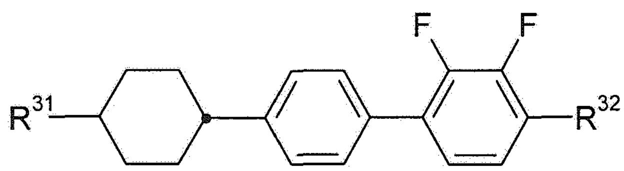

III-3-2

worin $R^{31}$ und $R^{32}$ die jeweiligen in Anspruch 1 bei Formel III-2 gegebenen Bedeutungen haben, enthält.

8. Medium nach einem oder mehreren der Ansprüche 1 bis 7, **dadurch gekennzeichnet, dass** es eine oder mehrere Verbindungen der Formel III-4, wie in Anspruch 1 angegeben, enthält.

9. Medium nach einem oder mehreren der Ansprüche 1 bis 8, **dadurch gekennzeichnet, dass** es zusätzlich eine oder mehrere chirale Verbindungen enthält.

10. Elektrooptische Anzeige oder elektrooptische Komponente **dadurch gekennzeichnet, dass** sie ein flüssigkristallines Medium nach einem oder mehreren der Ansprüche 1 bis 9 enthält.

11. Anzeige nach Anspruch 10, **dadurch gekennzeichnet, dass** sie auf dem VA- oder dem ECB-Effekt basiert.

12. Anzeige nach Anspruch 10 oder 11, **dadurch gekennzeichnet, dass** sie eine Aktivmatrix-Adressierungsvorrichtung aufweist.

13. Verwendung eines flüssigkristallinen Mediums nach einem oder mehreren der Ansprüche 1 bis 9 in einer elektrooptischen Anzeige oder in einer elektrooptischen Komponente.

14. Verfahren zur Herstellung eines flüssigkristallinen Mediums, **dadurch gekennzeichnet, dass** die Verbindung der Formel I nach Anspruch 1 mit einem oder mehreren Phenolderivaten der Formel

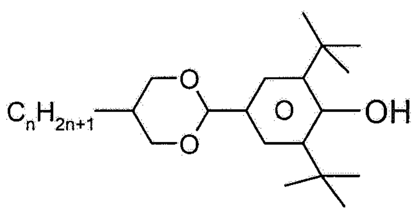

nach Anspruch 1, mit einer oder mehreren Verbindungen der Formel II nach Anspruch 1 und einer oder mehreren Verbindungen ausgewählt aus der Gruppe der Verbindungen der Formeln III-1 bis III-4 nach Anspruch 1 gemischt

wird.

**15.** Verfahren zur Stabilisierung eines flüssigkristallinen Mediums, das eine oder mehrere Verbindungen der Formel II nach Anspruch 1 und eine oder mehrere Verbindungen ausgewählt aus der Gruppe der Verbindungen der Formeln III-1 bis III-4 nach Anspruch 1 enthält, **dadurch gekennzeichnet, dass** dem Medium die Verbindung der Formeln I und ein oder mehrere Phenolderivate der Formel

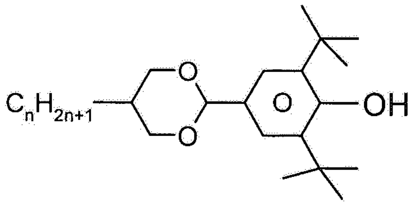

nach Anspruch 1, zugesetzt werden.

## Claims

**1.** Liquid-crystalline medium having a nematic phase and negative dielectric anisotropy which comprises

a) a compound of the formula I

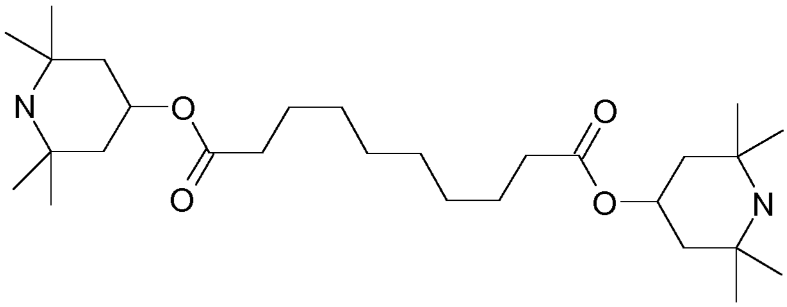

I

and one or more phenol derivatives of the formula

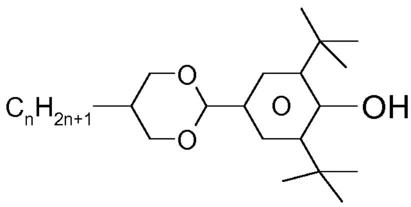

in which

n denotes an integer in the range from 1 to 12,

b) one or more compounds of the formula II

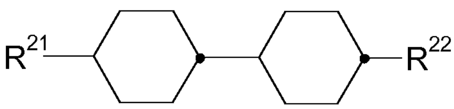

II

in which

$R^{21}$ denotes an unsubstituted alkyl radical having 1 to 7 C atoms or an unsubstituted alkenyl radical having 2 to 7 C atoms and
$R^{22}$ denotes an unsubstituted alkenyl radical having 2 to 7 C atoms,

and
c) one or more compounds selected from the group of the compounds of the formulae III-1 to III-4

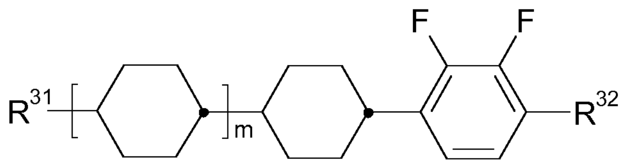

III-1

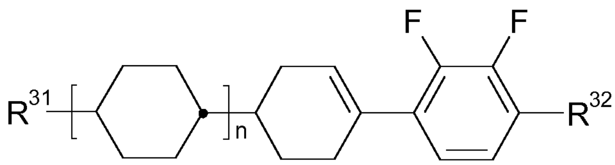

III-2

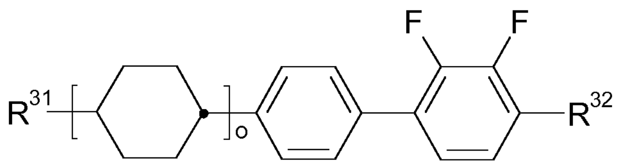

III-3

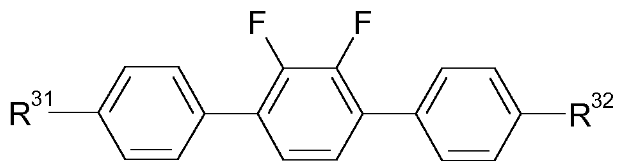

III-4

in which

$R^{31}$ denotes an unsubstituted alkyl radical having 1 to 7 C atoms,
$R^{32}$ denotes an unsubstituted alkyl radical having 1 to 7 C atoms or an unsubstituted alkoxy radical having 1 to 6 C atoms, and
m, n and o each, independently of one another, denote 0 or 1.

**2.** Medium according to Claim 1, **characterised in that** it additionally comprises one or more phenol derivatives selected from the group of the compounds of the formulae

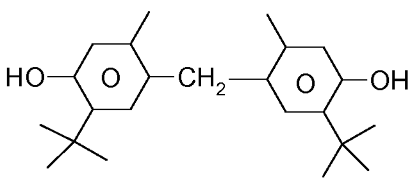

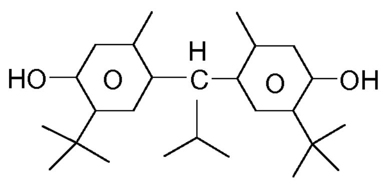

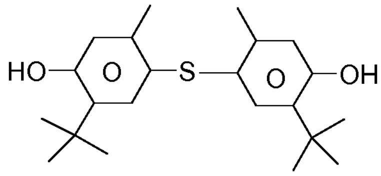

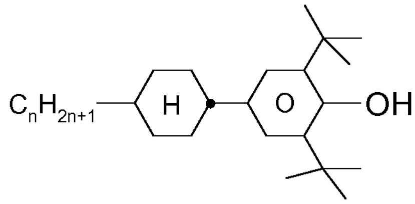

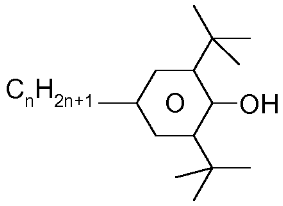

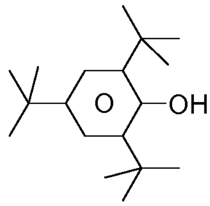

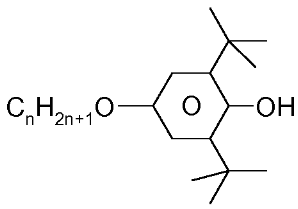

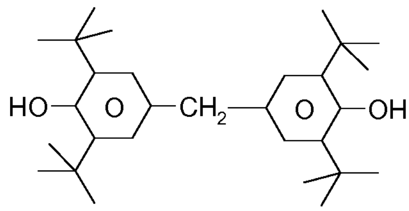

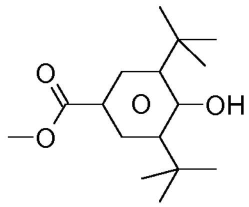

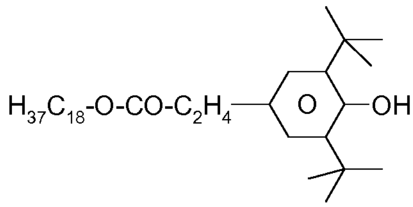

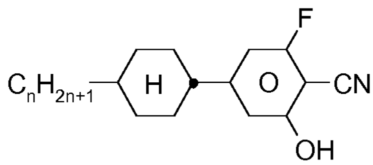

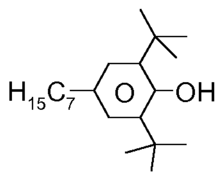

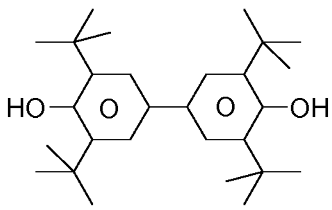

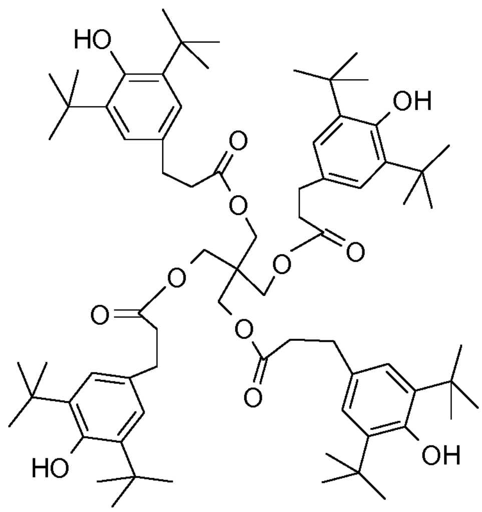

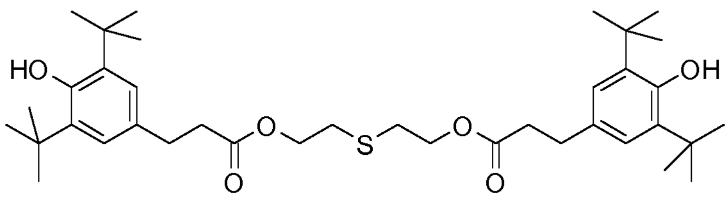

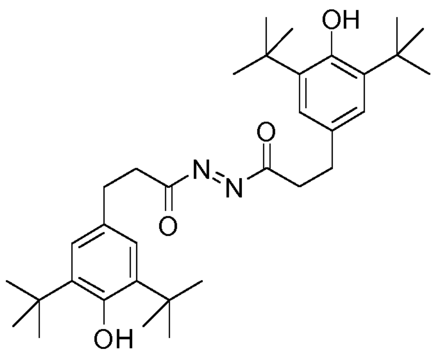

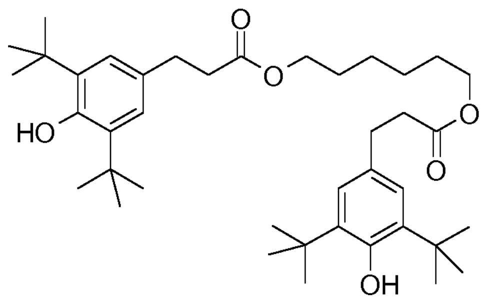

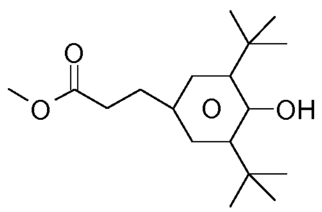

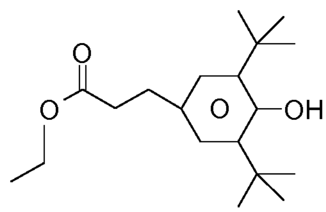

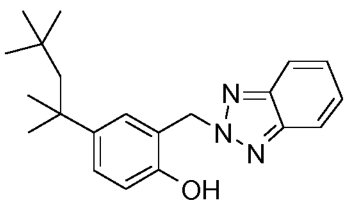

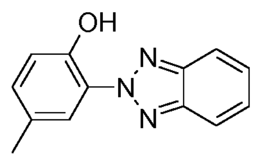

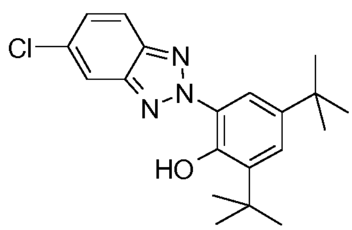

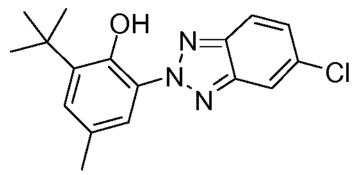

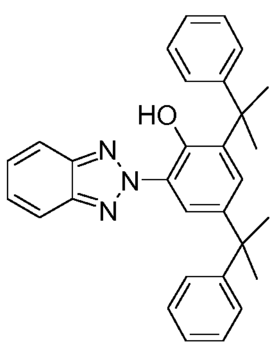

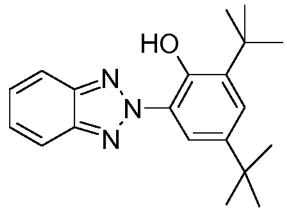

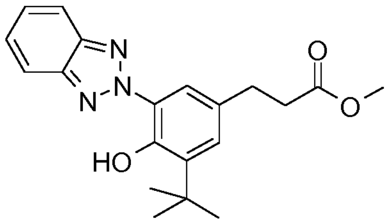

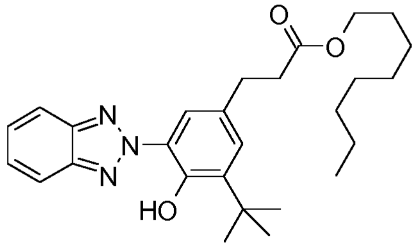

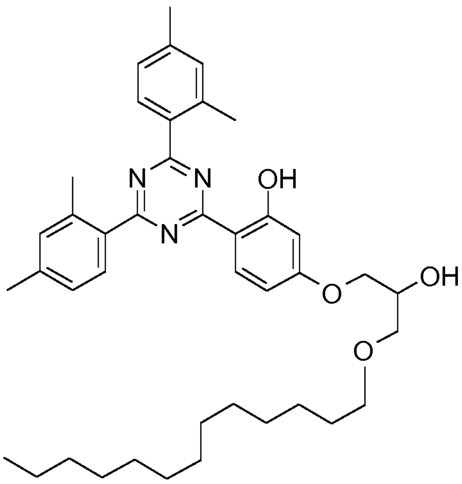

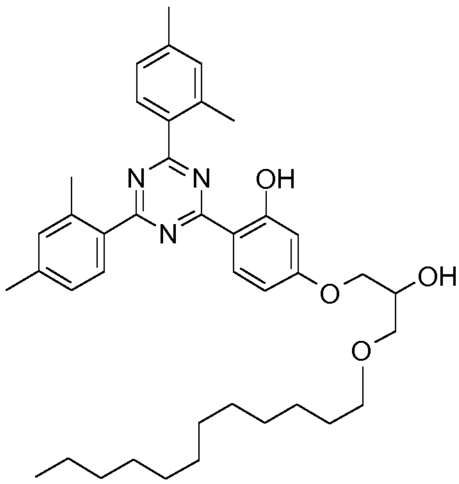

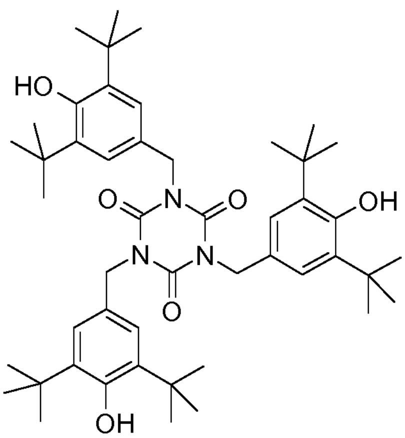

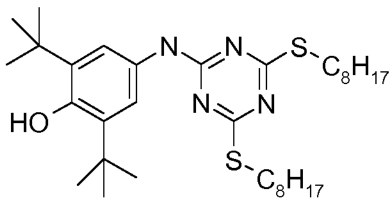

in which

n denotes an integer in the range from 1 to 12.

3. Medium according to Claim 1 or 2, **characterised in that** it comprises a compound of the formula

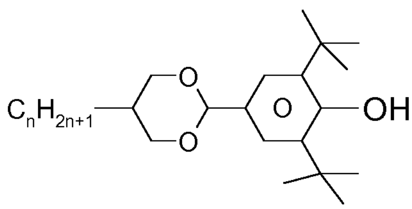

in which n denotes 3.

4. Medium according to one or more of Claims 1 to 3, **characterised in that** it comprises one or more compounds of

the formula II, as indicated in Claim 1, in which $R^{22}$ denotes vinyl.

5. Medium according to Claim 4, **characterised in that** the total concentration of the compounds of the formula II, as indicated in Claim 4, in the medium as a whole is 25% or more to 45% or less.

6. Medium according to one or more of Claims 1 to 4, **characterised in** it comprises one or more compounds of the formula III-2-2

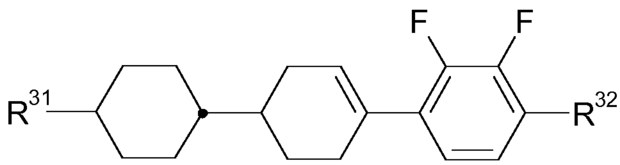

III-2-2

in which $R^{31}$ and $R^{32}$ have the respective meanings given in Claim 1 for formula III-2.

7. Medium according to one or more of Claims 1 to 6, **characterised in** it comprises one or more compounds of the formula III-3-2

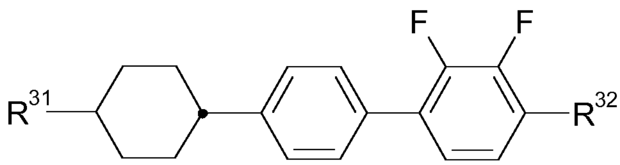

III-3-2

in which $R^{31}$ and $R^{32}$ have the respective meanings given in Claim 1 for formula III-2.

8. Medium according to one or more of Claims 1 to 7, **characterised in that** it comprises one or more compounds of the formula III-4, as indicated in Claim 1.

9. Medium according to one or more of Claims 1 to 8, **characterised in that** it additionally comprises one or more chiral compounds.

10. Electro-optical display or electro-optical component, **characterised in that** it contains a liquid-crystalline medium according to one or more of Claims 1 to 9.

11. Display according to Claim 10, **characterised in that** it is based on the VA or ECB effect.

12. Display according to Claim 10 or 11, **characterised in that** it has an active-matrix addressing device.

13. Use of a liquid-crystalline medium according to one or more of Claims 1 to 9 in an electro-optical display or in an electro-optical component.

14. Process for the preparation of a liquid-crystalline medium, **characterised in that** the compound of the formula I according to Claim 1 is mixed with one or more phenol derivatives of the formula

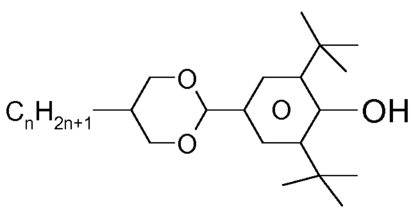

according to Claim 1, one or more compounds of the formula II according to Claim 1 and one or more compounds selected from the group of the compounds of the formulae III-1 to III-4 according to Claim 1.

**15.** Process for the stabilisation of a liquid-crystalline medium which comprises one or more compounds of the formula II according to Claim 1 and one or more compounds selected from the group of the compounds of the formulae III-1 to III-4 according to Claim 1, **characterised in that** the compound of the formula I and one or more phenol derivatives of the formula

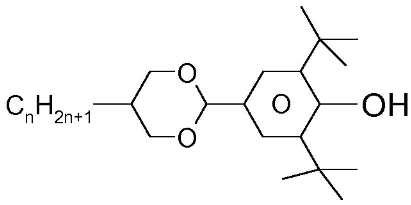

according to Claim 1 are added to the medium.

**Revendications**

**1.** Milieu cristallin liquide présentant une phase nématique et une anisotropie diélectrique négative, lequel comprend

a) un composé de la formule I

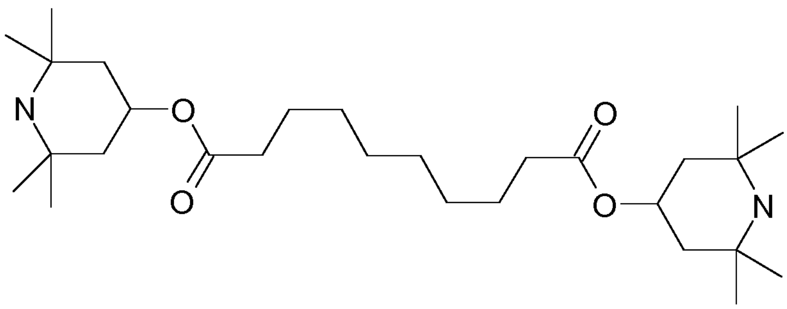

I

et un ou plusieurs dérivé(s) de phénol de la formule

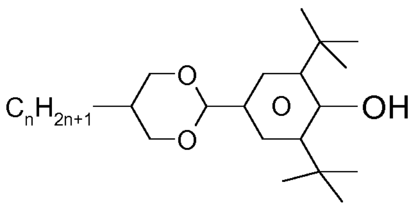

dans laquelle

n représente un entier dans la plage de 1 à 12,

b) un ou plusieurs composé(s) de la formule II

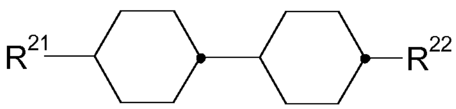

II

dans laquelle

$R^{21}$ représente un radical alkyle non substitué qui comporte de 1 à 7 atome(s) de C ou un radical alkényle non substitué qui comporte de 2 à 7 atomes de C et

$R^{22}$ représente un radical alkényle non substitué qui comporte de 2 à 7 atomes de C,

et

c) un ou plusieurs composé(s) qui est/sont sélectionné(s) parmi le groupe des composés des formules III-1 à III-4

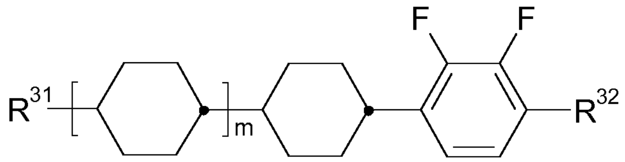

III-1

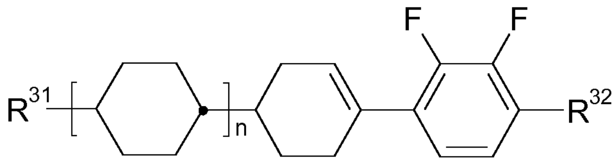

III-2

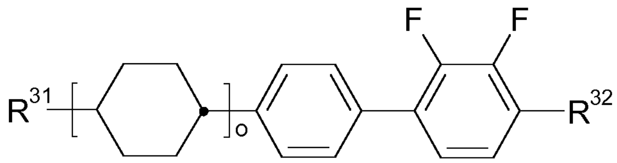

III-3

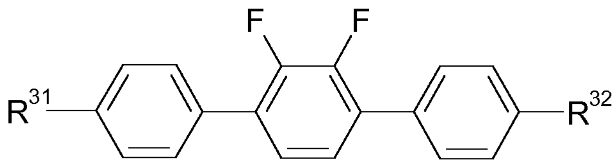

III-4

dans lesquelles

$R^{31}$ représente un radical alkyle non substitué qui comporte de 1 à 7 atome(s) de C,
$R^{32}$ représente un radical alkyle non substitué qui comporte de 1 à 7 atome(s) de C ou un radical alcoxy non substitué qui comporte de 1 à 6 atome(s) de C, et
m, n et o représentent chacun, de manière indépendante les uns des autres, 0 ou 1.

**2.** Milieu selon la revendication 1, **caractérisé en ce qu'**il comprend de façon additionnelle un ou plusieurs dérivé(s) de phénol qui est/sont sélectionné(s) parmi le groupe des composés des formules

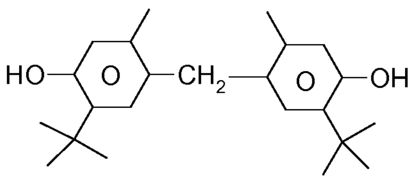

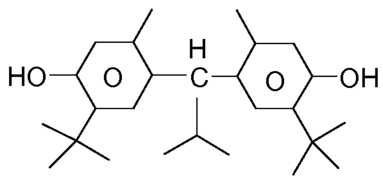

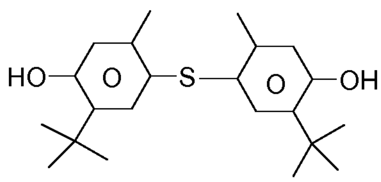

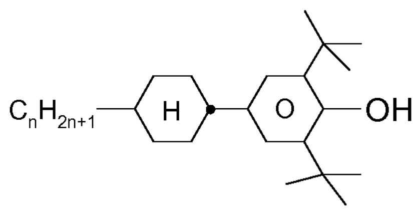

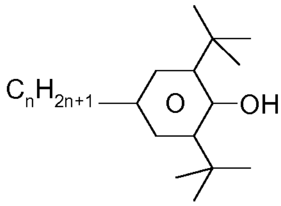

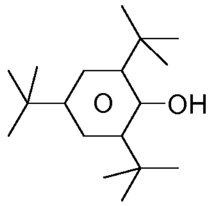

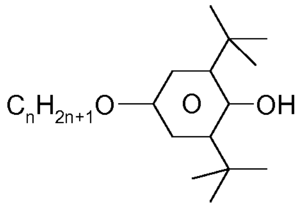

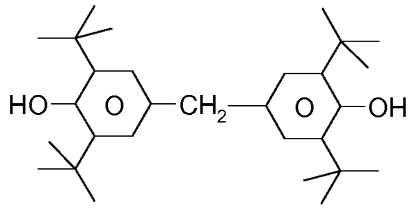

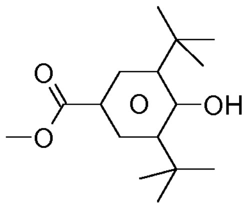

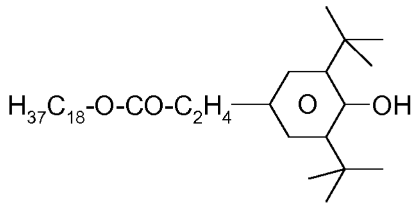

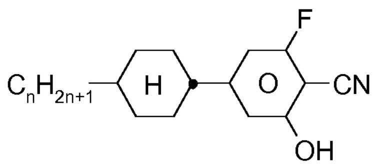

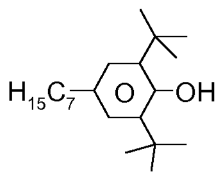

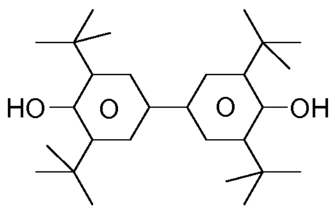

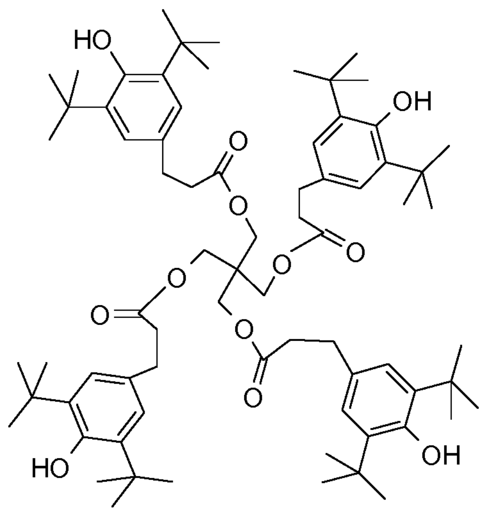

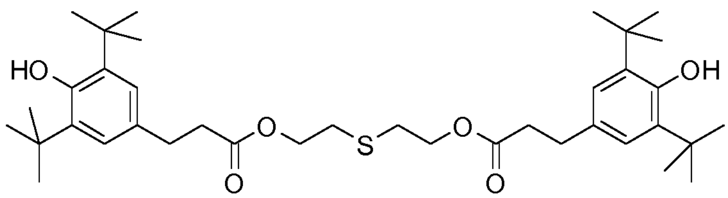

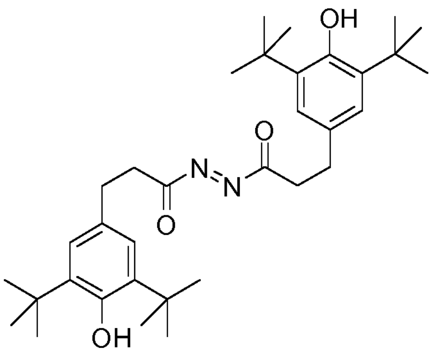

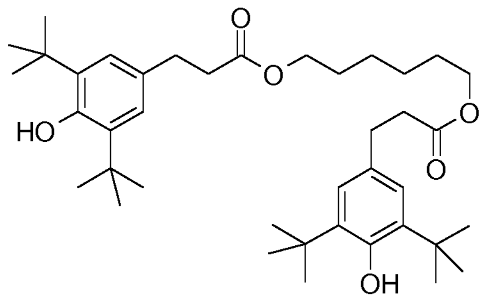

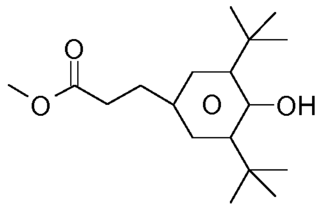

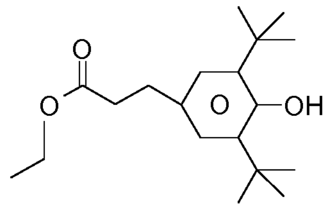

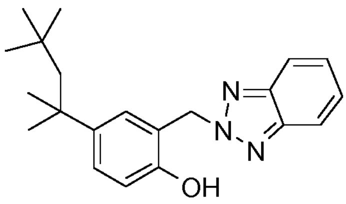

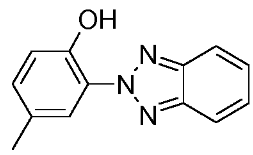

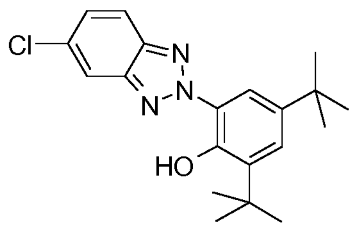

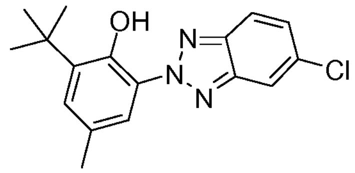

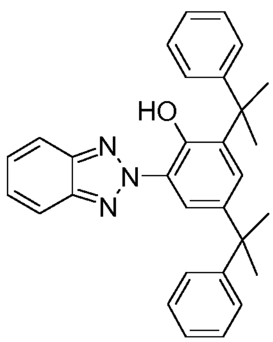

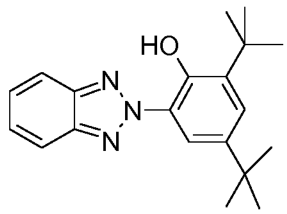

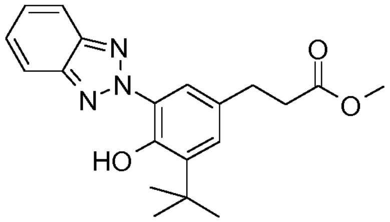

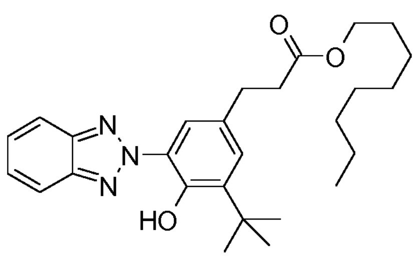

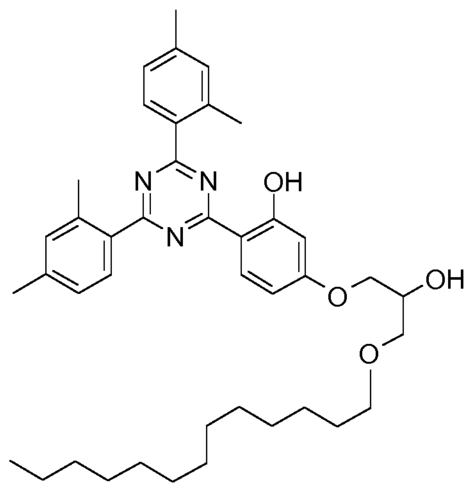

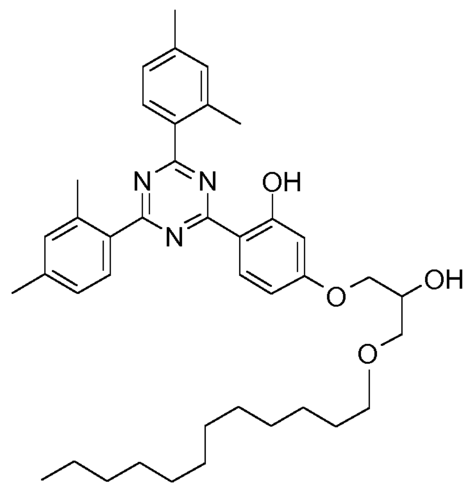

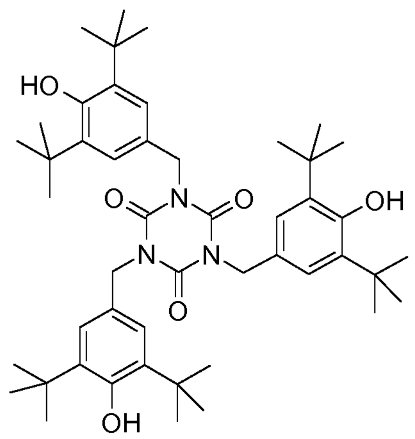

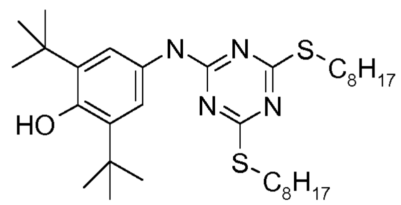

dans lesquelles

n représente un entier dans la plage de 1 à 12.

3. Milieu selon la revendication 1 ou 2, **caractérisé en ce qu'**il comprend un composé de la formule

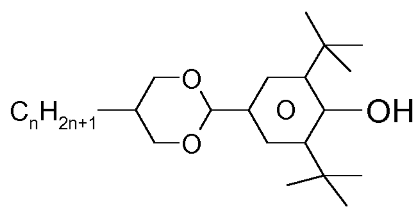

dans laquelle n représente 3.

4. Milieu selon une ou plusieurs des revendications 1 à 3, **caractérisé en ce qu'**il comprend un ou plusieurs composé(s) de la formule II, comme il a été indiqué selon la revendication 1, dans laquelle $R^{22}$ représente vinyle.

5. Milieu selon la revendication 4, **caractérisé en ce que** la concentration totale des composés de la formule II, comme il a été indiqué selon la revendication 4, dans le milieu considéré dans sa globalité est de 25 % ou plus à 45% ou moins.

6. Milieu selon une ou plusieurs des revendications 1 à 4, **caractérisé en ce qu'**il comprend un ou plusieurs composé(s) de la formule III-2-2

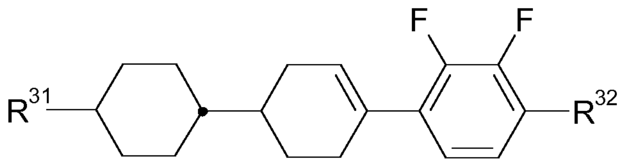

III-2-2

dans laquelle $R^{31}$ et $R^{32}$ présentent les significations respectives qui ont été données selon la revendication 1 pour la formule III-2.

**7.** Milieu selon une ou plusieurs des revendications 1 à 6, **caractérisé en ce qu'**il comprend un ou plusieurs composé(s) de la formule III-3-2

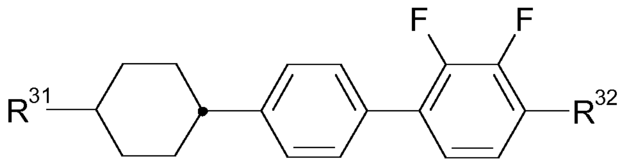

III-3-2

dans laquelle $R^{31}$ et $R^{32}$ présentent les significations respectives qui ont été données selon la revendication 1 pour la formule III-2.

**8.** Milieu selon une ou plusieurs des revendications 1 à 7, **caractérisé en ce qu'**il comprend un ou plusieurs composé(s) de la formule III-4, comme il a été indiqué selon la revendication 1.

**9.** Milieu selon une ou plusieurs des revendications 1 à 8, **caractérisé en ce qu'**il comprend de façon additionnelle un ou plusieurs composé(s) chiral/chiraux.

**10.** Affichage électro-optique ou composant électro-optique, **caractérisé en ce qu'**il contient un milieu cristallin liquide selon une ou plusieurs des revendications 1 à 9.

**11.** Affichage selon la revendication 10, **caractérisé en ce qu'**il est basé sur l'effet VA ou ECB.

**12.** Affichage selon la revendication 10 ou 11, **caractérisé en ce qu'**il s'agit d'un dispositif à adressage par matrice active.

**13.** Utilisation d'un milieu cristallin liquide selon une ou plusieurs des revendications 1 à 9 dans un affichage électro-optique ou dans un composant électro-optique.

**14.** Procédé pour la préparation d'un milieu cristallin liquide, **caractérisé en ce que** le composé de la formule I selon la revendication 1 est mélangé avec un ou plusieurs dérivé(s) de phénol de la formule

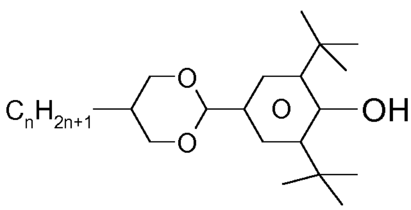

selon la revendication 1, un ou plusieurs composé(s) de la formule II selon la revendication 1 et un ou plusieurs composé(s) qui est/sont sélectionné(s) parmi le groupe des composés des formules III-1 à III-4 selon la revendication 1.

**15.** Procédé pour la stabilisation d'un milieu cristallin liquide qui comprend un ou plusieurs composé(s) de la formule II selon la revendication 1 et un ou plusieurs composé(s) qui est/sont sélectionné(s) parmi le groupe des composés des formules III-1 à III-4 selon la revendication 1, **caractérisé en ce que** le composé de la formule I et un ou plusieurs dérivé(s) de phénol de la formula

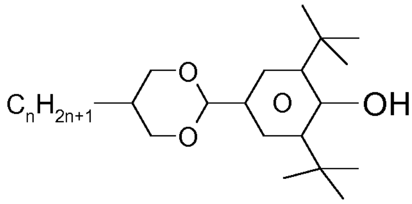

selon la revendication 1 sont ajoutés au milieu.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2009129911 A1
- EP 2182046 A1
- WO 2008009417 A1
- WO 2009021671 A1
- WO 2009115186 A1
- JP S55023169 A
- JP H05117324 A
- WO 0218515 A1
- JP H09291282 A
- DE 19714231
- DE 18723275
- DE 19831712
- DE 19945890
- DE 10050880
- EP OS0240379 A


### In der Beschreibung aufgeführte Nicht-Patentliteratur


- **M.F. SCHIECKEL ; K. FAHRENSCHON.** Deformation of nematic liquid crystals with vertical orientation in electrical fields. *Appl. Phys. Lett.,* 1971, vol. 19, 3912
- **VON J.F. KAHN.** *Appl. Phys. Lett.,* 1972, vol. 20, 1193
- **G. LABRUNIE ; J. ROBERT.** *J. Appl. Phys.,* 1973, vol. 44, 4869
- **J. ROBERT ; F. CLERC.** *SID 80 Digest Techn. Papers,* 1980, 30
- **J. DUCHENE.** *Displays,* 1986, vol. 7, 3
- **H. SCHAD.** *SID 82 Digest Techn. Papers,* 1982, 244
- **TOGASHI, S. ; SEKIGUCHI, K. ; TANABE, H. ; YAMAMOTO, E. ; SORIMACHI, K. ; TAJIMA, E. ; WATANABE, H. ; SHIMIZU, H.** A 210-288 Matrix LCD Controlled by Double Stage Diode Rings. *Proc. Eurodisplay,* September 1984, vol. 84, 141
- **STROMER, M.** Design of Thin Film Transistors for Matrix Adressing of Television Liquid Crystal Displays. *Proc. Eurodisplay,* September 1984, vol. 84, 145
- **YEO, S.D.** Vortrag 15.3: ''A LC Display for the TV Application. *SID 2004 International Symposium, Digest of Technical Papers, XXXV,* vol. II, 758, , 759
- **YOSHIDE, H. et al.** Vortrag 3.1: ''MVA LCD for Notebook or Mobile PCs ... *SID 2004 International Symposium, Digest of Technical Papers, XXXV,* vol. I, 6-9
- **LIU, C.T. et al.** Vortrag 15.1: ''A 46-inch TFT-LCD HDTV Technology ... *SID 2004 International Symposium, Digest of Technical Papers, XXXV,* vol. II, 750-753
- **KIM ; SANG SOO.** Vortrag 15.4: ''Super PVA Sets New State-of-the-Art for LCD-TV. *SID 2004 International Symposium, Digest of Technical Papers, XXXV,* vol. II, 760-763
- **SHIGETA ; MITZUHIRO ; FUKUOKA ; HIROFUMI.** Vortrag 15.2: ''Development of High Quality LCDTV. *SID 2004 International Symposium, Digest of Technical Papers, XXXV,* vol. II, 754-757
- **SOUK, JUN.** *SID Seminar 2004, Seminar M-6: ''Recent Advances in LCD Technology'', Seminar Lecture Notes, M-6/1 bis M-6/26,* 2004
- **MILLER ; IAN.** *SID Seminar 2004, Seminar M-7: ''LCD-Television'', Seminar Lecture Notes, M-7/1 bis M-7/32,* 2004
- **KIM ; HYEON KYEONG et al.** Vortrag 9.1: ''A 57-in. Wide UXGA TFT-LCD for HDTV Application. *SID 2004 International Symposium, Digest of Technical Papers, XXXV,* vol. I, 106-109
- **KIRSCH, P. ; REIFFENRATH, V. ; BREMER, M.** *Molecular Design and Synthesis, Synlett,* 1999, vol. 4, 389
- **KIRSCH, P. ; TARUMI, K.** *Angew. Chem. Int. Ed.,* 1997, vol. 37, 484
- **KIRSCH, P. ; HECKMEIER, M. ; TARUMI, K.** *Liquid Crystals,* 1999, vol. 26, 449
- Merck Liquid Crystals, Physical Properties of Liquid Crystals. Merck KGaA, November 1997